# EUROPEAN PATENT SPECIFICATION

(11) **EP 4 257 496 B1**
(45) Date of publication and mention of the grant of the patent: **14.08.2024**
(21) Application number: 22216896.5
(22) Date of filing: 28.12.2022
(51) Int. Cl.: B65B 19/22, B65B 51/00, B29C 65/02

(54) **WRAPPING UNIT AND METHOD TO PRODUCE A SEALED WRAP AROUND A GROUP OF SMOKING ARTICLES**
VERPACKUNGSEINHEIT UND VERFAHREN ZUR HERSTELLUNG EINER VERSIEGELTEN UMHÜLLUNG UM EINE GRUPPE VON RAUCHARTIKELN
UNITÉ D'EMBALLAGE ET PROCÉDÉ DE PRODUCTION D'UN EMBALLAGE SCELLÉ AUTOUR D'UN GROUPE D'ARTICLES À FUMER

(30) Priority: 23.03.2022 IT 202200005681
(43) Date of publication of application: 11.10.2023
(73) Proprietor: G.D SOCIETA' PER AZIONI, 40133 Bologna (IT)
(72) Inventor: FORTINI, Massimo, 40133 Bologna (IT)
(74) Representative: Studio Torta S.p.A.

(56) References cited:
- EP-A1- 0 970 889
- EP-A1- 1 702 848
- US-B1- 6 341 474

## Description

### CROSS-REFERENCE TO RELATED APPLICATIONS

This patent application claims priority from Italian patent application no. 102022000005681 filed on March 23,2022.

### TECHNICAL FIELD

The present invention relates to a wrapping unit and method to produce a sealed wrap around a group of smoking articles.

### PRIOR ART

Patent application EP1059236A1 discloses a wrapping unit which produces a sealed wrap around a group of smoking articles by folding a heat-sealable wrapping sheet. This wrapping unit initially tubularly wraps the wrapping sheet around the group of smoking articles to form a tubular wrap which is stabilized by a longitudinal seal and has two open ends; subsequently, the two open ends are closed by means of folds formed by fixed folding blades and are then stabilized by transverse seals.

It has been observed that in the known wrapping unit described above, when the operating speed (measured as the number of sealed wraps produced per unit of time) is high, the final quality of the sealed wrap is good but not excellent, namely, the sealed wrap may have some small wrinkles which, while not compromising the integrity of the sealed wrap in any way, damage the aesthetics of the sealed wrap.

US6341474B1 discloses a soft pack of cigarettes, in which flaps of an outer wrapping sheet are overlapping and connected to one another by means of hot glue which has been previously applied to the outer wrapping sheet before starting to fold the outer wrapping sheet and is activated by heating during or after the folding of the outer wrapping sheet.

### DESCRIPTION OF THE INVENTION

The object of the present invention is to provide a wrapping unit and method to produce a sealed wrap around a group of smoking articles, which wrapping unit and method do not have the drawbacks described above (namely, they allow to maintain a high final quality of the sealed wrap even when the operating speed is high) and are at the same time simple to carry out.

According to the present invention a wrapping unit and method are provided to produce a sealed wrap around a group of smoking articles as claimed in the appended claims.

The claims describe embodiments of the present invention forming an integral part of the present description.

### BRIEF DESCRIPTION OF THE DRAWINGS

The present invention will now be described with reference to the attached drawings, which illustrate a non-limiting embodiment thereof, wherein:
- Figure 1 is a front perspective view and in a closed configuration of a rigid pack of cigarettes;
- Figure 2 is a rear perspective view of the pack of cigarettes of Figure 1 in a closed configuration;
- Figure 3 is a front perspective view of the pack of cigarettes of Figure 1 in an open configuration;
- Figure 4 is a front perspective view of a sealed wrap contained in the pack of cigarettes of Figure 1;
- Figure 5 is a perspective view of a group of cigarettes coupled to a reinforcing element and contained in the sealed wrap of Figure 4;
- Figure 6 is a plan view, without folds of the reinforcing element of Figure 5;
- Figure 7 is a plan view of a wrapping sheet used to form the sealed wrap of Figure 4;
- Figure 8 is a plan view of a blank used to form an outer container provided with a hinged lid of the pack of cigarettes of Figure 1;
- Figures 9-16 illustrate some steps of the folding of the wrapping sheet of Figure 7 around the group of cigarettes of Figure 5 in order to obtain the sealed wrap of Figure 4;
- Figure 17 is a front view and with parts removed for clarity of a packing machine which produces the pack of cigarettes of Figure 1 and is made according to the present invention;
- Figure 18 is a perspective view showing the paths followed by the components of the pack of cigarettes of Figure 1 in the packing machine of Figure 17;
- Figure 19 is a perspective view and on an enlarged scale of a detail of Figure 18;
- Figure 20 is a schematic plan view of an initial part of the packing machine of Figure 17;
- Figure 21 is a schematic front view of three wrapping wheels of the packing machine of Figure 17;
- Figure 22 is a schematic plan view of a wrapping wheel and of a linear wrapping conveyor of the packing machine of Figure 17;
- Figure 23 is a front view and with parts removed for clarity of the three wrapping wheels of Figure 21;
- Figure 24 is a perspective view and with parts removed for clarity of two wrapping wheels of Figure 21 and of the linear wrapping conveyor of Figure 22;
- Figures 25 and 26 are two different schematic views of the linear wrapping conveyor of Figure 22;
- Figures 27, 28 and 29 are schematic views of the linear wrapping conveyor of Figure 22 with sealing heads in three different positions taken at different operating moments;
- Figure 30 is a perspective and schematic view of a pocket of a wrapping wheel of Figure 21; and
- Figure 31 is a schematic view of two folding devices of the packing machine of Figure 17.

### PREFERRED EMBODIMENTS OF THE INVENTION

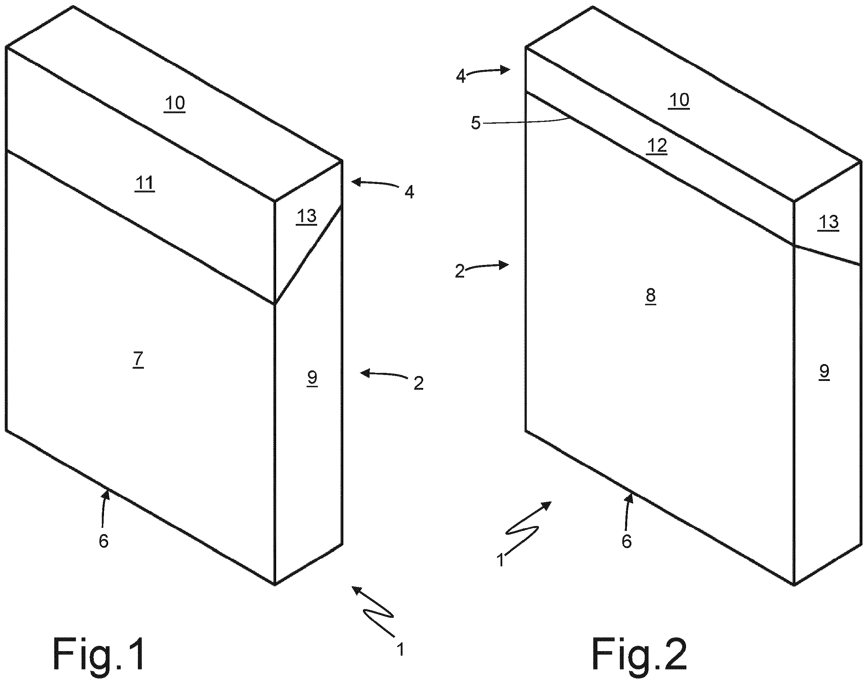

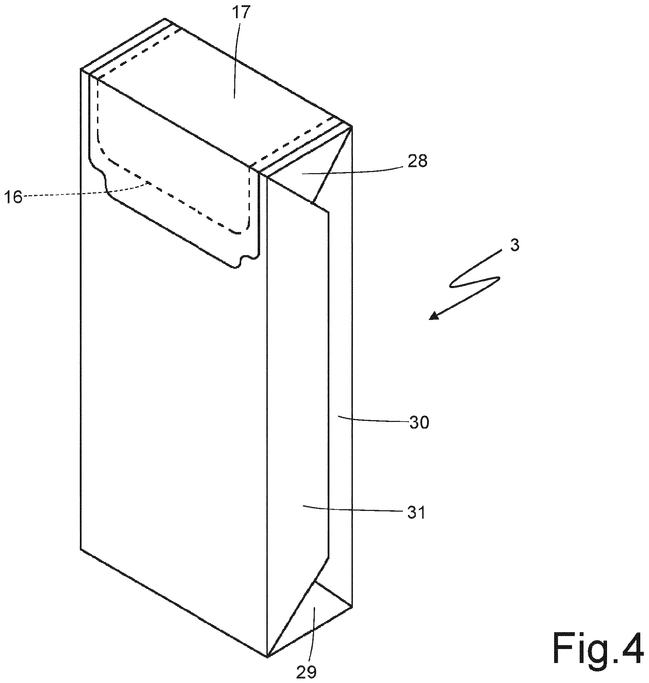

In Figures 1, 2 and 3, number 1 denotes, as a whole, a rigid "*twin*" pack of cigarettes. The pack 1 of cigarettes comprises an outer container 2 made of rigid and cup-shaped cardboard or paperboard and a pair of wraps 3 (one of which is better illustrated in Figure 4) housed side by side inside the container 2.

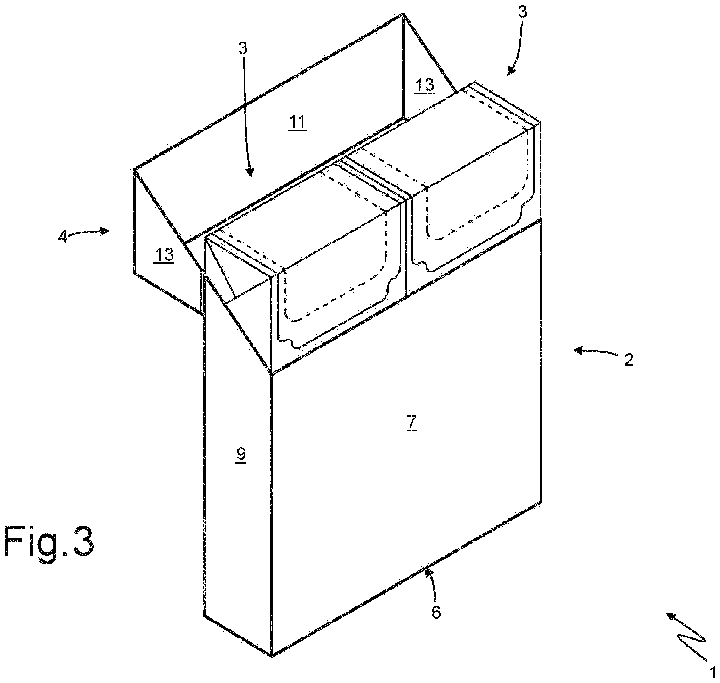

The outer container 2 has an open upper end and is provided with a lid 4, which is cup-shaped and is hinged to the outer container 2 along a hinge 5 (illustrated in Figure 2) to rotate, relative the outer container 2, between an open position (illustrated in Figure 3) and a closed position (illustrated in Figures 1 and 2) of the open upper end. The outer container 2 has a substantially rectangular parallelepiped shape oriented according to a main vertical development direction, is cup-shaped, and has an open upper end, a lower wall 6 opposite the open upper end, a front wall 7 and a rear wall 8 (in which the hinge 5 is obtained) parallel and opposite to one another, and two side walls 9 parallel and opposite to one another.

The lid 4 has a substantially rectangular parallelepiped shape, is cup-shaped, and has an open lower end (facing the open upper end of the outer container 2 when the lid 4 is in the closed position), an upper wall 10 (which is parallel and opposite the lower wall 6 of the outer container 2 when the lid 4 is in the closed position), a front wall 11 (which is parallel and aligned with the front wall 7 of the outer container 2 when the lid 4 is in the closed position), a rear wall 12 (which is parallel and aligned with the rear wall 8 of the outer container 2 when the lid 4 is in the closed position and is hinged to the rear wall 8 of the outer container 2 along the hinge 5), and two side walls 13 parallel and opposite to one another (which are parallel and aligned, in particular coplanar and adjacent, to the side walls 9 of the outer container 2 or when the lid 4 is in the closed position).

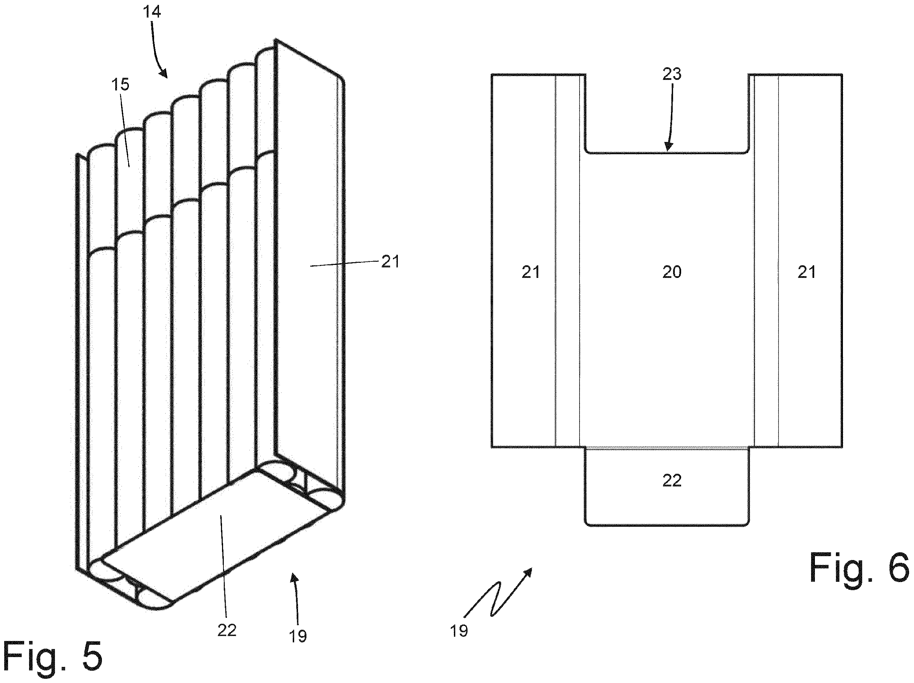

Each sealed wrap 3 (illustrated in Figure 4) encloses a group 14 of cigarettes (partially illustrated in Figure 5) having a parallelepiped shape; each cigarette is provided with a filter 15 and therefore the group 14 of cigarettes has an upper wall made up of the circular ends (tips) of the filters 15 and a lower wall, opposite the upper wall, made up of the circular ends (tips) of the tobacco rods.

As illustrated in Figure 4, the sealed wrap 3 has an opening 16 on the top and in front for extracting the cigarettes, which is delimited by a pre-weakened tearable line, is closed by a reusable closing label 17 and affects a portion of a front wall of the sealed wrap 3 and a portion of an upper wall of the sealed wrap 3. According to a preferred embodiment, the closing label 17 is fixed to the sealed pack 3 of cigarettes by means of re-stick glue that does not dry, which is applied to the lower surface of the closing label 17 and is provided completely around the extraction opening 16 to allow the closing label 17 to be repeatedly partially separated from the sealed wrap 3 and then re-fixed to the sealed wrap 3.

According to a different embodiment not illustrated, the sealed wrap 3 is devoid of the extraction opening 16 and of the respective closing label 17 and has a removable upper portion, which is separated from the rest of the sealed wrap 3 by a pre-weakened tearable line to be removed by tearing at the first opening of the sealed wrap 3; in this embodiment, the sealed wrap 3 is preferably provided with a tearable opening strip to facilitate the breaking of the sealed wrap 3 along the pre-weakened line.

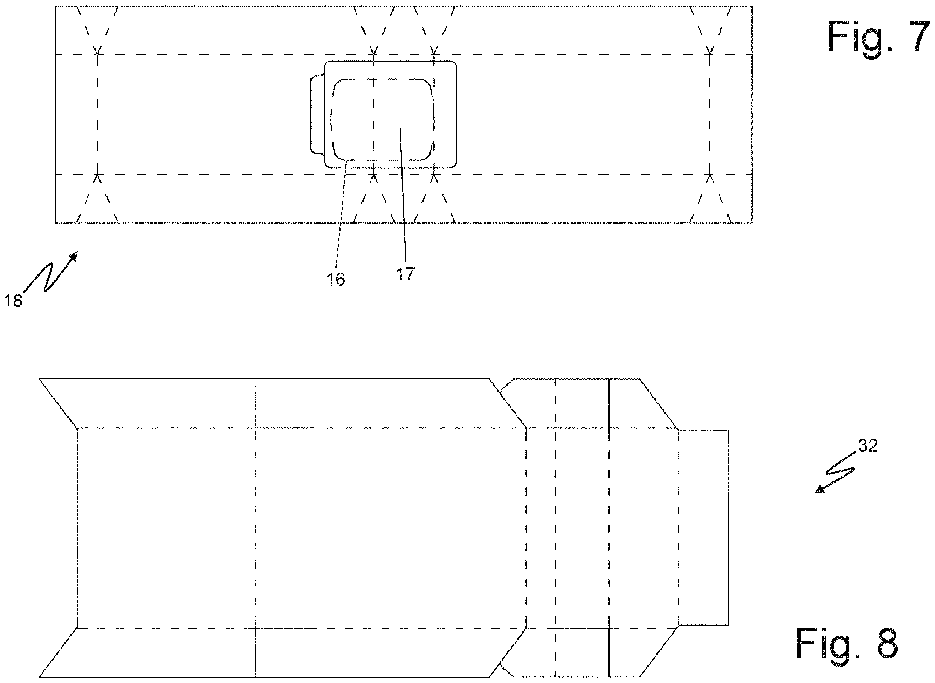

The sealed wrap 3 is obtained by folding a wrapping sheet 18 (illustrated in Figure 7), which has a rectangular shape, comprises at least one layer of air-tight and heat-sealable plastic material, and is folded directly around the group 14 of cigarettes so as to be in direct contact with the cigarettes. Once the wrapping sheet 18 has been folded around the group 14 of cigarettes to form the sealed wrap 3, the shape of the sealed wrap 3 is stabilized by heat-sealing the overlapping portions of the wrapping sheet 18.

Before folding the wrapping sheet 18 around the group 14 of cigarettes, the wrapping sheet 18 is pre-cut to define the extraction opening 16; subsequently, the closing label 17 is applied to the wrapping sheet 18, which is glued at the bottom, that is, provided on its lower surface with re-stick glue that inside the extraction opening 16, causes the permanent gluing of an inner portion of the wrapping sheet 18 to the closing label 17 and outside the extraction opening 16 causes a separable gluing of the wrapping sheet 18 to the closing label 17.

As illustrated in Figures 4 and 5, the sealed wrap 4 could comprise a reinforcing element 19, which is made of cardboard or rigid paperboard, is U-shaped and is arranged inside the sealed wrap 3 in contact with the group 14 of cigarettes. The function of the reinforcing element 19 is to give greater rigidity and greater shape stability to the sealed wrap 3 so as to prevent the sealed wrap 3 from collapsing after having removed part of the cigarettes contained in the sealed wrap 3, thus making the extraction of the remaining cigarettes complicated and in particular making the opening and subsequent re-closing of the closing label 17 extremely complicated. A further function of the reinforcing member 19 is to provide mechanical protection to the cigarettes during folding of the wrapping sheet 18, mechanical and thermal protection to the cigarettes during heat sealing of the overlapping portions of the wrapping sheet 18, and mechanical protection to the cigarettes while handling the sealed wrap 3.

As better illustrated in Figure 6 , the reinforcing element 19 comprises a front wall 20 arranged in contact with the cylindrical side walls of the cigarettes of the group 14 of cigarettes, two side walls 21 arranged on opposite sides of the front wall 20 in contact with the cylindrical sides of the cigarettes of the group 14 of cigarettes, a lower wall 22 arranged in contact with the tips of the cigarettes of the group 14 of cigarettes (namely, arranged in contact with the lower wall of the group 14 of cigarettes), and a (small) rear wall 23 arranged in contact with the cylindrical side walls of the cigarettes of the group 14 of cigarettes on the opposite side of the front wall 20. Preferably, the front wall 20 has an upper flaring 24 which is arranged at the cigarette extraction opening 16 so that the front wall 20 does not overlap the cigarette extraction opening 16.

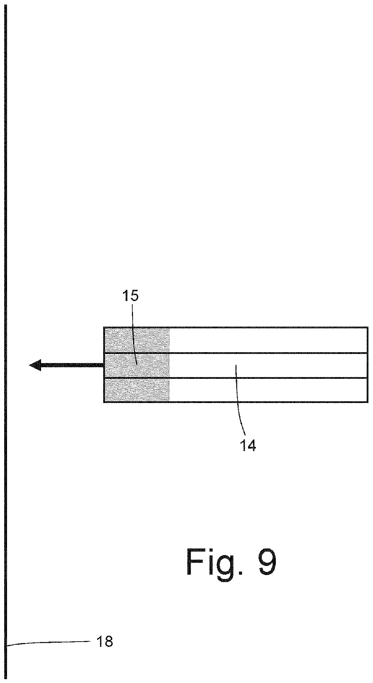

The formation of the sealed wrap 3 provides for initially forming the group 14 of cigarettes and then folding the reinforcing element 19 around the group 14 of cigarettes (obtaining what is illustrated in Figure 5). Subsequently and as illustrated in Figure 9, the wrapping sheet 18 is folded around the group 14 of cigarettes coupled to the reinforcing element 19. The group 14 of cigarettes has: two larger side walls which are opposite one another and are made up of the cylindrical side walls of the cigarettes, two smaller side walls which are opposite one another and are made up of the cylindrical side walls of the cigarettes, an upper wall made up of the ends of the filters 15, and a lower wall made up of the ends (tips) of the tobacco rods.

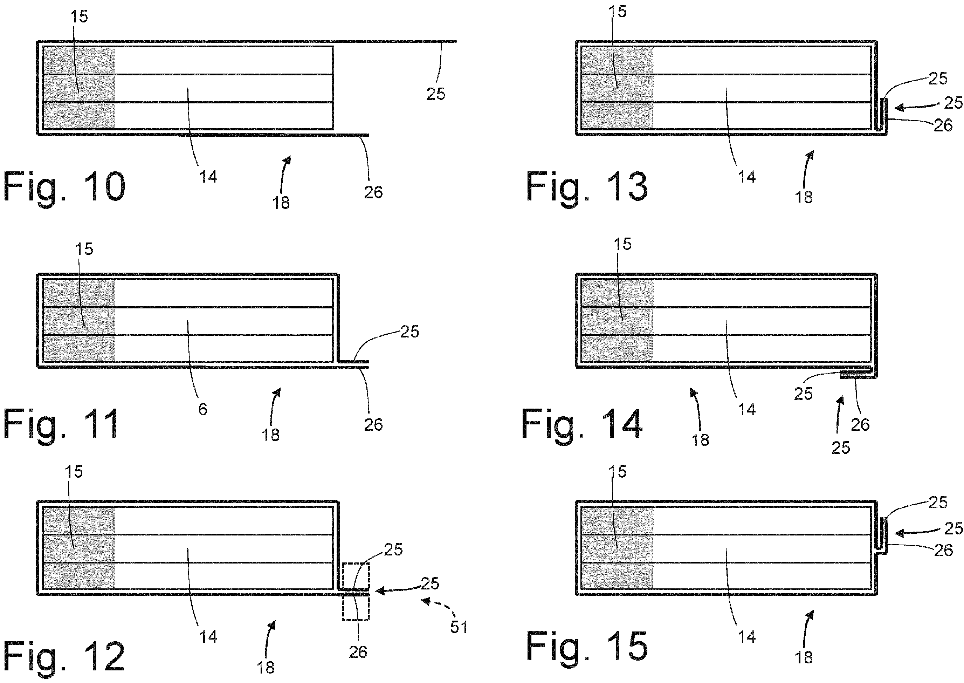

Initially, the group 14 of cigarettes is coupled to the outspread wrapping sheet 18 by bringing the upper wall (on the side of the filters 15) of the group 14 of cigarettes into contact with the wrapping sheet 18 (as illustrated in Figure 9); subsequently, the wrapping sheet is folded into a "U" shape around the group 14 of cigarettes (as illustrated in Figure 10) so that the "U"-folded wrapping sheet 18 is arranged in the area of the upper wall and of the two larger side walls of the group 14 of cigarettes and has two ends 25 and 26 that are parallel to the larger side walls and protrude from the larger side walls (namely, continue beyond the larger side walls); it is important to observe that the wrapping sheet 18 is fed asymmetrically in front of the group 14 of cigarettes (namely, the wrapping sheet 18 is placed asymmetrically against the upper wall of the group 14 of cigarettes) to define the two ends 25 and 26 that both protrude from the group 14 of cigarettes and have a different length (namely, the end 25 is longer than the end 26 and the difference in length between the end 25 and the end 26 is equal to the width of the lower wall of the group 14 of cigarettes). As illustrated in Figure 10, the end 25 is parallel to a first larger side wall of the group 14 of cigarettes and protrudes from the first lower wall of the group 14 of cigarettes continuing beyond the larger side wall; similarly, the end 26 is parallel to a second larger side wall of the group 14 of cigarettes and protrudes from the lower wall of the group 14 of cigarettes continuing beyond the second larger side wall.

As illustrated in Figure 11, the end 25 is folded by 90° relative the first larger side wall of the group 14 of cigarettes and against the bottom wall of the group 14 of cigarettes and, simultaneously, a final part of the end 25 is folded by 90° to give the end 25 an "L" shape and then arrange the final part of the end 25 parallel to and resting on the end 26 (which does not undergo, in this step, any type of folding, that is, remains parallel to the second larger side wall) giving the wrapping sheet 18 a tubular shape; in other words, at the same time (namely, with the same folding action) the end 25 is folded by 90° in two distinct points: a first fold by 90° around the corner between the first larger side wall and the lower wall and a second fold at the corner between the second larger side wall and the lower wall (namely, near the end 26) so as to give the end 25 an "L" shape and to rest the final part of the end 25 against the end 26.

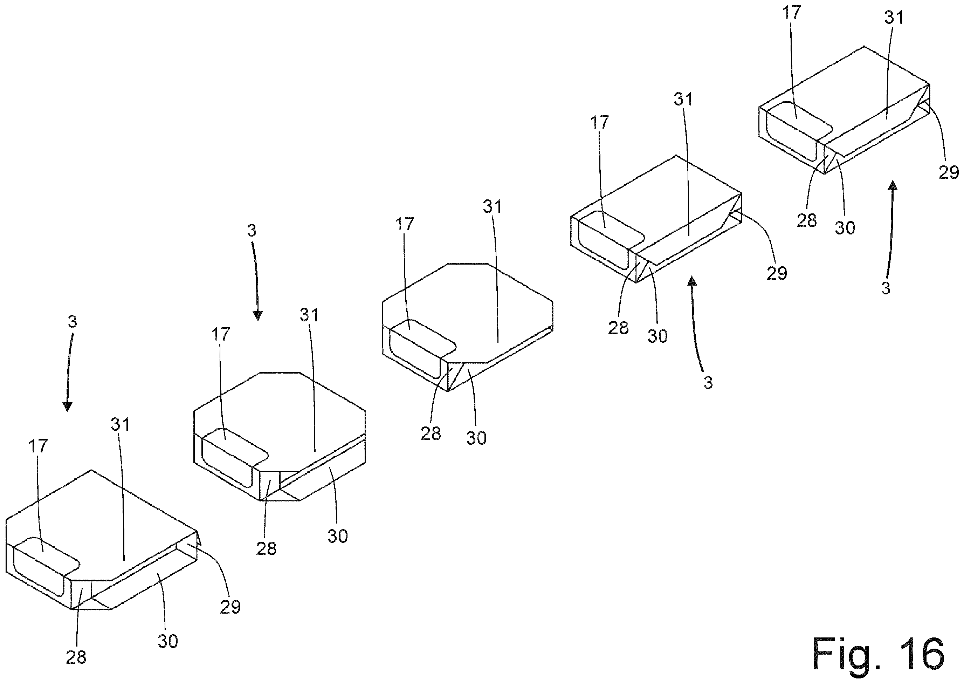

When the end 25 is folded into an "L" shape and rests (in its final part) against the end 26, a tubular shape having two open side edges (illustrated in Figure 16) at the smaller side walls of group 14 of cigarettes is given to the wrapping sheet 18. At this point, as illustrated in Figure 12, the overlapping portions of the ends 25 and 26 are heat-sealed to one another to stabilize the tubular shape of the wrapping sheet 18 and to form a sealing fin 27. Finally, the overlapping and heat-sealed ends 25 and 26 (namely, the sealing fin 27) are folded by 90° against the lower wall of the group 14 of cigarettes (as illustrated in Figure 13) and with the interposition of part of the wrapping sheet 18. Alternatively, the mutually overlapping and heat-sealed ends 25 and 26 (namely, the sealing fin 27) are folded by 180° against the second larger side wall of the group 14 of cigarettes (as illustrated in Figure 14) and with the interposition of part of the wrapping sheet 18. According to a further embodiment illustrated in Figure 15, the two ends 25 and 26 have the same length, they are both folded into an "L" shape against the lower wall of the group 14 of cigarettes to form the sealing fin 27, and finally the sealing fin 27 (which is initially at the centre of the bottom wall of the group 14 of cigarettes) is folded by 90° against the bottom wall of the group 14 of cigarettes.

Subsequently, and as illustrated in Figure 16, the two open side edges of the wrapping sheet 18 (which has a tubular shape around the group 14 of cigarettes) are closed by means of the so-called "*soap-bar fold*" which, for each side edge, provides for: folding two smaller flaps 28 and 29 against the smaller side wall of the group 14 of cigarettes (in fact, the smaller flap 28 arranged at the top wall of the group 14 of cigarettes is previously folded when the wrapping sheet 18 is first in contact with the group 14 of cigarettes and is folded into a "U" shape around the group 14 of cigarettes), folding a larger flap 30 against the smaller side wall of the group 14 of cigarettes and over the two previously folded smaller flaps 28 and 29, and finally folding the other larger flap 31 against the smaller side wall of the group 14 of cigarettes and over the two smaller flaps 28 and 29 and the larger flap 30 previously folded. After completing the folding of the wrapping sheet 18 around the group 14 of cigarettes by closing the two side edges by means of respective lateral folds, these lateral folds are stabilized by heat sealing, namely, by heat sealing the overlapping parts of the wrapping sheet 18 at the smaller side walls of the group 14 of cigarettes.

As illustrated in Figure 8, the outer container 2 and the lid 4 are formed by folding a blank 32 of the conventional type.

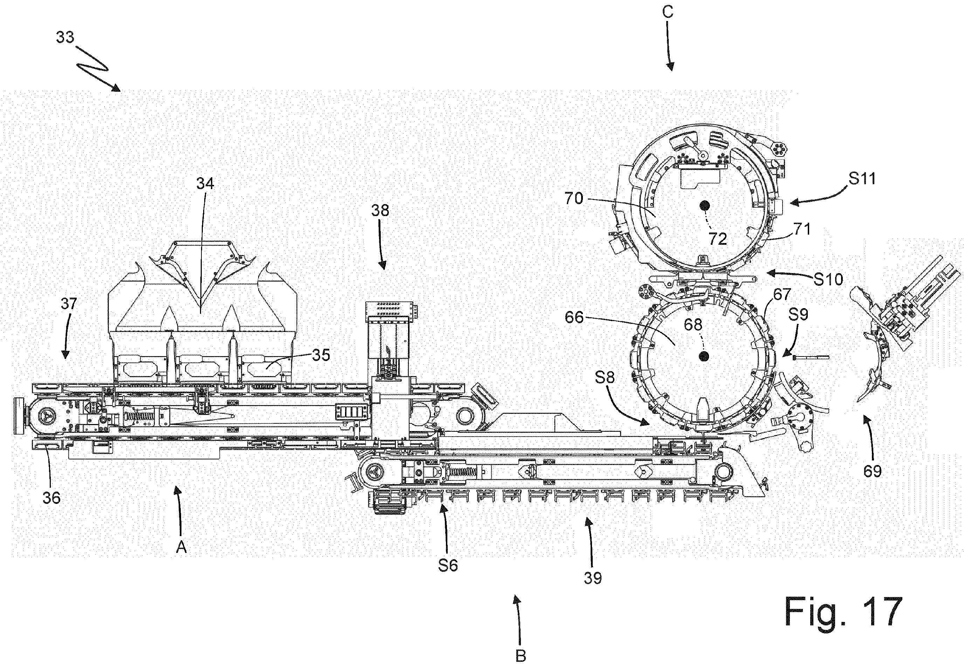

Number 33 in Figure 17 denotes, as a whole, a packing machine that is designed to produce the pack 1 of cigarettes described above and works with intermittent motion (namely, a motion which provides for a cyclical alternation of motion steps and stop steps).

The packing machine 33 comprises a forming unit A in which the groups 14 of cigarettes are formed in succession, a wrapping unit B in which a respective wrapping sheet 18 is wrapped around each group 14 of cigarettes to form a sealed wrap 3, and a wrapping unit C in which a blank 32 is wrapped around each pair of coupled sealed wraps 3 (namely, arranged side by side) to form an outer container 2 provided with a lid 4.

The forming unit A to form the groups 14 of cigarettes comprises a hopper 34 provided with three output mouths 35 for simultaneously feeding three pairs of groups 14 of cigarettes to three respective pairs of pockets 36 of a forming conveyor 37 which supports a plurality of pairs of pockets 36: each pocket 36 is designed to contain a group 14 of cigarettes and the pockets 36 are grouped in pairs so that a plurality of pairs of pockets 36 are provided side by side. In other words, from each output mouth 35 two side-by-side groups 14 of cigarettes are extracted together and inserted together into two corresponding pockets 36 arranged side by side.

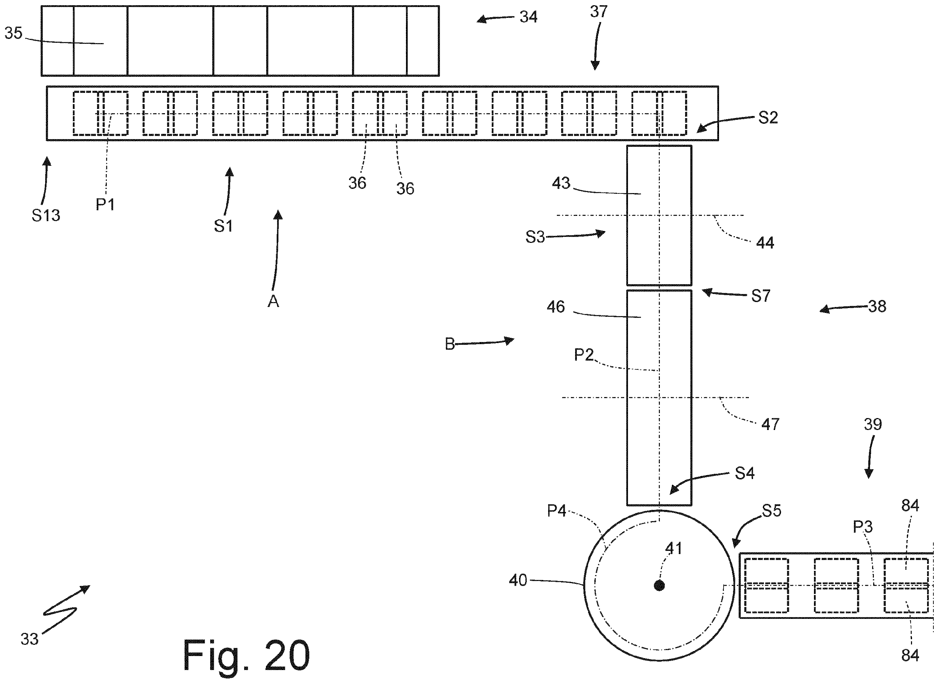

The forming conveyor 37 comprises an annular shaped conveyor belt, which is wound around two end pulleys (one of which is motorized), supports the pockets 36 and moves in a step like manner to cyclically move the pockets 36 along a forming path P1 (illustrated in Figure 20). As better illustrated in Figure 20, the forming path P1 develops between an input station S1 in which each pair of groups 14 of cigarettes is extracted from an output mouth 35 of the hopper 34 and enters a corresponding pair of pockets 36 and a transfer station S2 in which each pair of groups 14 of cigarettes is extracted from the corresponding pair of pockets 36.

As illustrated in Figure 20, the wrapping unit B comprises a wrapping conveyor 38 which is arranged downstream of the forming conveyor 37 (namely, it receives the pairs of side-by-side groups 14 of cigarettes from the forming conveyor 37 in the transfer station S2) and is designed to move the pairs of side-by-side groups 14 of cigarettes together with the corresponding wrapping sheets 18 along a wrapping path P2 to (start to) fold each wrapping sheet 18 around the corresponding group 14 of cigarettes. In particular, the wrapping path P2 extends from the transfer station S2 in which the wrapping conveyor 38 receives two groups 14 of cigarettes at a time from a corresponding pair of pockets 36 of the forming conveyor 37, passes through a feeding station S3 in which each pair of side-by-side groups 14 of cigarettes is coupled with a corresponding pair of side-by-side wrapping sheets 18, and ends in a transfer station S4 in which the pairs of sealed wraps 3 being formed (namely, each formed by a wrapping sheet 18 only partially folded around a corresponding group 14 of cigarettes) leave the wrapping conveyor 38.

In particular, along the wrapping path P2 (namely, while being moved by the wrapping conveyor 38) each wrapping sheet 18 is initially folded into a "U" shape and subsequently into a tube around a corresponding group 14 of cigarettes and the tubular wrapping (having two open lateral ends) thus formed is stabilized by a transverse sealing (as illustrated in Figures 9-15) .

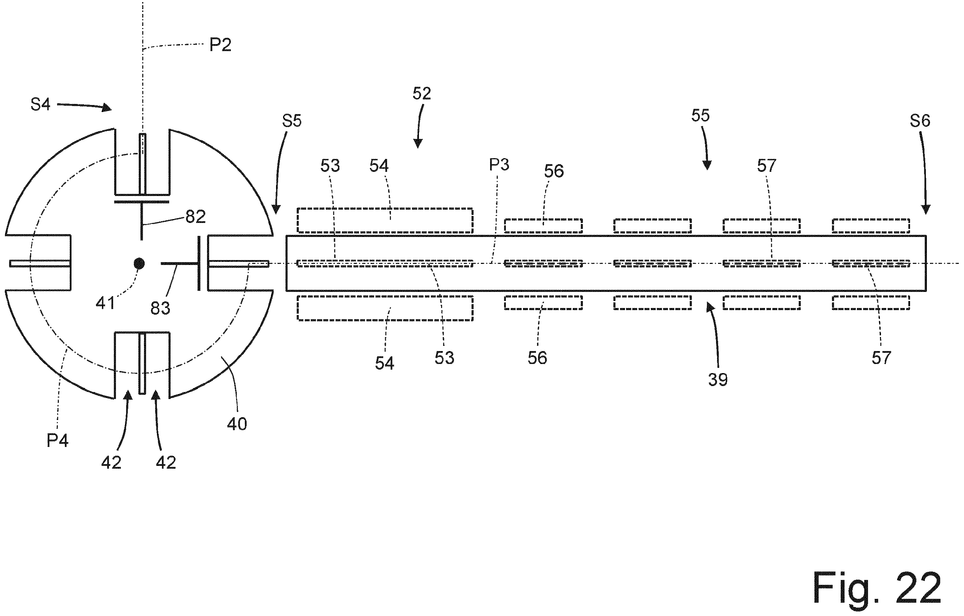

As illustrated in Figure 20, the wrapping unit B comprises a wrapping conveyor 39 which is arranged downstream of the wrapping conveyor 38 (namely, it receives the pairs of groups 14 of cigarettes placed side by side and coupled to the wrapping sheets 18 from the wrapping conveyor 38) and is designed to move the pairs of groups 14 of cigarettes placed side by side and coupled to the wrapping sheets 18 along a straight wrapping path P3 to (finish of folding) fold each wrapping sheet 18 around the corresponding group 14 of cigarettes. In particular, the wrapping path P3 extends from a transfer station S5 in which the wrapping conveyor 39 receives two groups 14 of cigarettes coupled to the wrapping sheets 18 at a time and ends in a transfer station S6 (illustrated in the Figure 22) in which the pairs of complete sealed wraps 3 (namely, each formed by a wrapping sheet 18 completely folded around a corresponding group 14 of cigarettes) leave the wrapping conveyor 39.

In particular, along the wrapping path P3 (namely, while it is moved by the wrapping conveyor 39) each tubular wrap 3 is closed laterally by means of lateral folds which are subsequently stabilized by means of two longitudinal seals completing (terminating) the formation of the tubular wrap 3 (as illustrated in Figure 16).

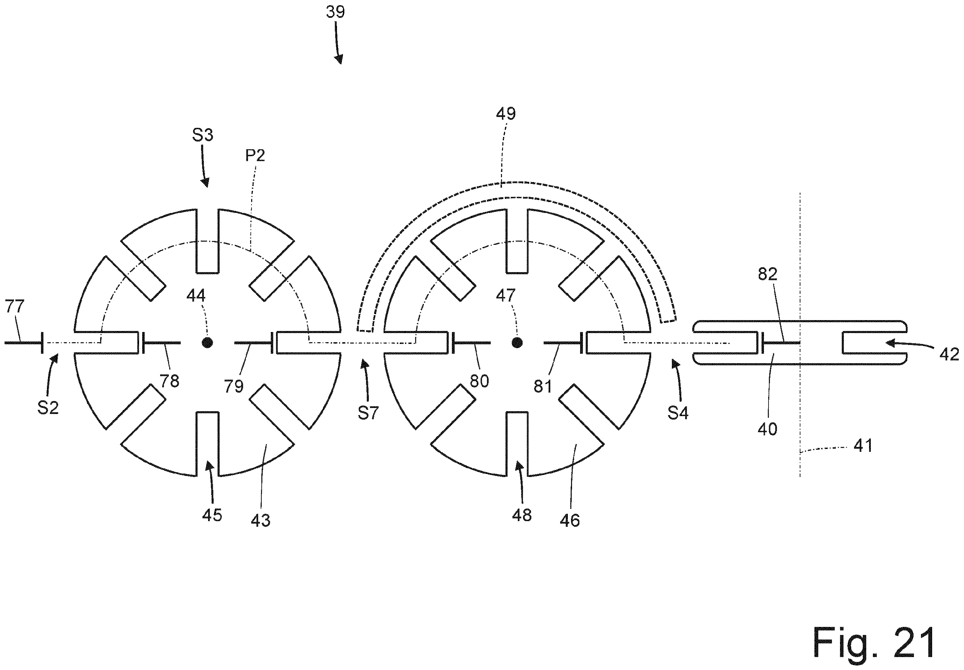

As illustrated in Figure 20, the wrapping unit B comprises a wrapping wheel 40 (arranged horizontally), which is interposed between the wrapping conveyor 38 and the wrapping conveyor 39, is mounted to rotate around a vertical rotation axis 41 (perpendicular to the wrapping path P3), and supports four pairs of pockets 42 (illustrated in Figures 21 and 22), each designed to contain a group 14 of cigarettes coupled to a wrapping sheet 18 (therefore a pair of side-by side pockets 42 supports a pair of groups 14 of cigarettes placed side by side and coupled to the respective wrapping sheets 18). The wrapping wheel 40 by rotating around the rotation axis 41 moves each pair of side-by-side pockets 42 along a circular wrapping path P4 between the transfer station S4 where the pair of side-by-side pockets 42 receives a pair of groups 14 of cigarettes placed side by side and coupled to the wrapping sheets 18 by the wrapping conveyor 38 and the transfer station S5 in which the pair of side-by-side pockets 42 releases the pair of groups 14 of cigarettes placed side by side and coupled to the wrapping sheets 18 to the wrapping conveyor 39.

As better illustrated in Figure 21, the wrapping conveyor 38 comprises a wrapping wheel 43 (vertically arranged) which is arranged immediately downstream of the forming conveyor 37, is mounted to rotate around a horizontal rotation axis 44 (parallel to the wrapping path P3 and perpendicular to the rotation axis 41), and supports a plurality of pairs of pockets 45, each designed to contain a group 14 of cigarettes coupled to a wrapping sheet 18 (therefore a pair of axially side-by-side pockets 45 supports a pair of groups 14 of cigarettes placed side by side and coupled to the respective wrapping sheets 18). The wrapping wheel 43 by rotating around the rotation axis 44 moves each pair of side-by-side pockets 45 along the circular wrapping path P2 between the transfer station S2 where the pair of side-by-side pockets 45 receives a pair of side-by-side groups 14 of cigarettes from the forming conveyor 37, through the feeding station S3 in which the pair of side-by-side pockets 45 receives a pair of side-by-side wrapping sheets 18 which are arranged outside the pair of side-by-side pockets 45, and a transfer station S7 in which the pair of side-by-side pockets 45 releases the pair of groups 14 of cigarettes placed side by side and coupled to the wrapping sheets 18.

As better illustrated in Figure 21, the wrapping conveyor 38 comprises a wrapping wheel 46 (vertically arranged) which is arranged immediately downstream of the wrapping wheel 43 and immediately upstream of the wrapping wheel 40, is mounted to rotate around a horizontal rotation axis 47 (parallel to rotation axis 44 and perpendicular to rotation axis 41), and supports a plurality of pairs of pockets 48, each designed to contain a group 14 of cigarettes coupled to a wrapping sheet 18 (therefore a pair of axially side-by-side pockets 48 supports a pair of groups 14 of cigarettes placed side by side and coupled to the respective wrapping sheets 18). The wrapping wheel 46 by rotating around the rotation axis 47 moves each pair of side-by-side pockets 48 along the circular wrapping path P2 between the transfer station S7 where the pair of side-by-side pockets 48 receives a pair of groups 14 of cigarettes placed side by side and coupled to the wrapping sheets 18 from the wrapping wheel 43 and the transfer station S4 in which the pair of side-by-side pockets 48 releases the pair of groups 14 of cigarettes placed side by side and coupled to the wrapping sheets 18 to the wrapping wheel 40.

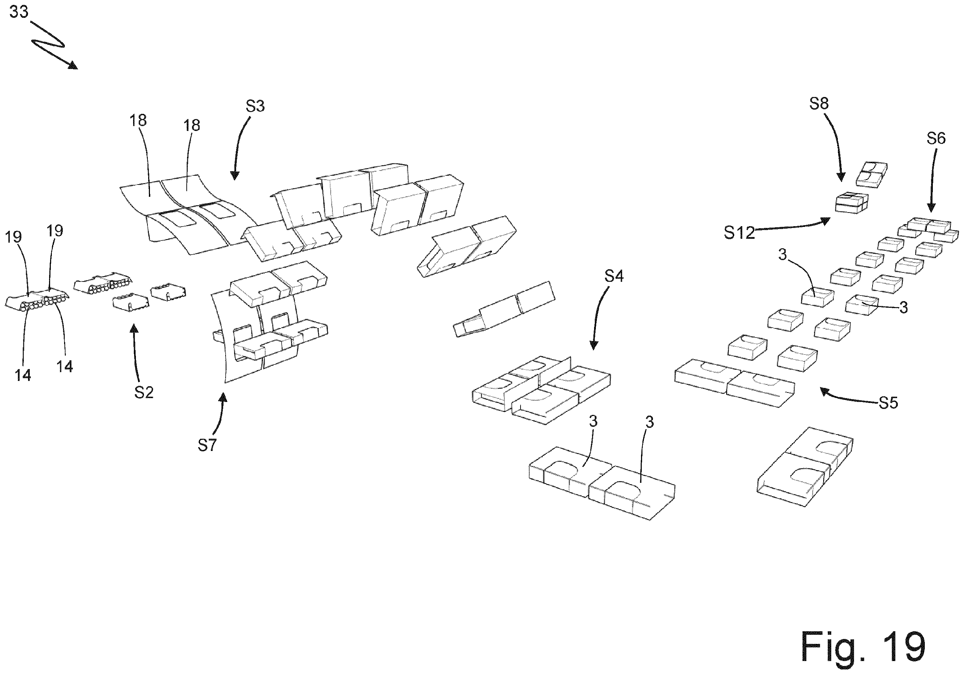

In other words, in the feeding station S3 two side-by-side wrapping sheets 18 are placed on the periphery of the packing wheel 43 in the area of a respective pair of side-by-side pockets 45 and move with the respective pair of side-by-side pockets 45 up to the transfer station S7; in the transfer station S7 the two side-by-side groups 14 of cigarettes, coming out from the pair of side-by-side pockets 45 of the wrapping wheel 43 and entering the respective pair of side-by-side pockets 48 of the wrapping wheel 46, drag therewith the two side-by-side wrapping sheets 18 that, while entering into the pockets 48, fold into a "U"-shape around the side-by-side groups 14 of cigarettes (as well illustrated in Figure 19) .

Along the wrapping path P2, the wrapping conveyor 38 moves the groups 14 of cigarettes with a longitudinal orientation (namely, with the cigarettes parallel to the wrapping path P2 and the cigarette filters 15 arranged at the front or in the back). Also along the wrapping path P3 the wrapping conveyor 39 moves the groups 14 of cigarettes with a longitudinal orientation (namely, with the cigarettes parallel to the wrapping path P2 and the cigarette filters 15 arranged in the front) .

As illustrated in Figures 21, 23 and 24, the packing machine 33 comprises two folding devices 49, each coupled to the wrapping wheel 46 and configured to fold a wrapping sheet 18 into a tube around the corresponding group 14 of cigarettes contained in a respective pocket 48. Each wrapping sheet 18 is folded into a "U"-shape around the corresponding group 14 of cigarettes when the group 14 of cigarettes enters (together with the wrapping sheet 18) the respective pocket 48 in the transfer station S7 and as illustrated in Figure 10; moreover, each folding device 49 performs the tubular folding of each wrapping sheet 18 around the corresponding group 14 of cigarettes illustrated in Figures 10 and 11. The wrapping wheel 46 moves along the wrapping path P2 a succession of pairs of groups 14 of cigarettes placed side by side and coupled to the wrapping sheets 18 (by means of corresponding pairs of side-by-side pockets 48) and therefore the two folding devices 49 are placed side by side to perform together and simultaneously the folding of two wrapping sheets 18 around two side-by-side groups 14 of cigarettes.

Furthermore, the packing machine 33 comprises two sealing devices 50, each coupled to the wrapping wheel 46 and configured to perform a transversal seal on a wrapping sheet 18 folded into a tube around the corresponding group 14 of cigarettes contained in a respective pocket 48. According to a preferred embodiment, each sealing device 50 comprises three different sealing heads 51 arranged in succession around the wrapping wheel 46 (namely, along the wrapping path P2) so that the transversal seal on each wrapping sheet 18 folded into a tube is performed in three distinct and successive steps (a sealing head 51 is also schematically illustrated in Figure 12). The wrapping wheel 46 moves along the wrapping path P2 a succession of pairs of groups 14 of cigarettes placed side by side and coupled to the wrapping sheets 18 and therefore the two sealing devices 50 are placed side by side to perform together and simultaneously the sealing of two wrapping sheets 18 around two side-by-side groups 14 of cigarettes.

As illustrated in Figure 22, the packing machine 33 comprises two folding devices 52, each coupled to the wrapping conveyor 39 and configured to fold a wrapping sheet 18 around the corresponding group 14 of articles, thus completing the formation of the sealed wrap 3, namely, by closing the two open ends of the wrapping sheet 18 folded into a tube as illustrated in Figure 16. The wrapping conveyor 39 moves along the wrapping path P2 a succession of pairs of groups 14 of cigarettes placed side by side and coupled to the wrapping sheets 18 and therefore the two folding devices 52 are placed side by side to fold together and simultaneously the two wrapping sheets 18 around two side-by-side groups 14 of cigarettes.

In particular, each folding device 52 comprises two fixed folding blades 53 and 54 (namely, folding profiles completely devoid of moving parts) arranged along the wrapping path P3 (namely, along the wrapping conveyor 39). In particular, a total of four fixed folding blades 53 and 54 are provided, each folding a lateral end of a corresponding wrapping sheet 18 folded into a tube: the packing conveyor 39 moves a succession of pairs of groups of cigarettes 14 placed side by side and coupled to the wrapping sheets 18 folded into a tube along the packing path P3, therefore for each group 14 of cigarettes two fixed folding blades 53 and 54 are required arranged at the two opposite ends of the group 14 of cigarettes. Consequently, two fixed folding blades 53 are arranged at the centre of the wrapping conveyor 39 (one fixed folding blade 53 that operates with the group 14 of cigarettes arranged on the right and the other fixed folding blade 53 that operates with the group 14 of cigarettes arranged on the left) and fixed two folding blades 54 are arranged on the sides of the wrapping conveyor 39 (one fixed folding blade 54 that operates with the group 14 of cigarettes arranged on the right and the other fixed folding blade 54 that operates with group 14 of cigarettes arranged on the left).

As illustrated in Figure 22, the packing machine 33 comprises two sealing devices 55, each coupled to the wrapping conveyor 39 and configured to perform the longitudinal seal on a wrapping sheet 18 folded around the group 14 of cigarettes, thus completing the formation of the corresponding sealed wrap 3. Each sealing device 55 is coupled to the wrapping conveyor 39 and is arranged along the wrapping path P3 downstream of the respective folding device 52 to provide a two-sided seal of a wrapping sheet 18 folded around a corresponding group 14 of cigarettes. According to a preferred embodiment, each sealing device 55 comprises a plurality of outer sealing heads 56 arranged outside the wrapping conveyor 39 and a plurality of inner sealing heads 57 arranged in the middle of the wrapping conveyor 39 (namely, in the central free area between two side-by-side groups 14 of cigarettes). Accordingly, two inner sealing heads 57 are arranged at the centre of the packing conveyor 39 (one inner sealing head 57 that operates with the group 14 of cigarettes arranged on the right and the other inner sealing head 57 that operates with the group 14 of cigarettes arranged on the left) and two outer sealing heads 56 on the sides of the wrapping conveyor 39 (one outer sealing head 56 that operates with the group 14 of cigarettes arranged on the right and the other outer sealing head 56 that operates with group 14 of cigarettes arranged on the left). Each sealing device 55 comprises several sealing heads 56 and 57 arranged in succession along the wrapping conveyor 39 (namely, along the wrapping path P3) so that the longitudinal seals on each wrapping sheet 18 are performed in several distinct and successive steps.

The wrapping conveyor 39 moves along the wrapping path P3 a succession of pairs of groups 14 of cigarettes placed side by side and coupled to the wrapping sheets 18 and therefore the two sealing devices 55 are placed side by side to perform jointly and simultaneously the sealing of two wrapping sheets 18 around two side-by-side groups 14 of cigarettes.

As previously stated, along the wrapping path P2 (and therefore in the area of the wrapping conveyor 38) a feeding station S3 is provided, in which pairs of side-by-side wrapping sheets 18 are arranged on the periphery of the wrapping wheel 43 in the area of a pair of side-by-side pockets 45 (containing two respective side-by-side groups 14 of cigarettes).

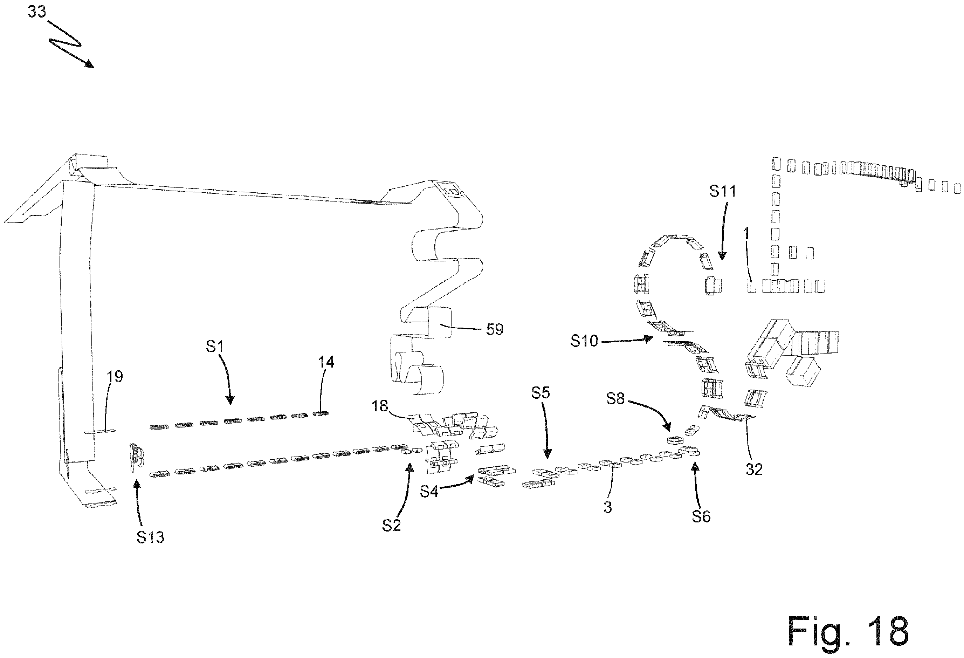

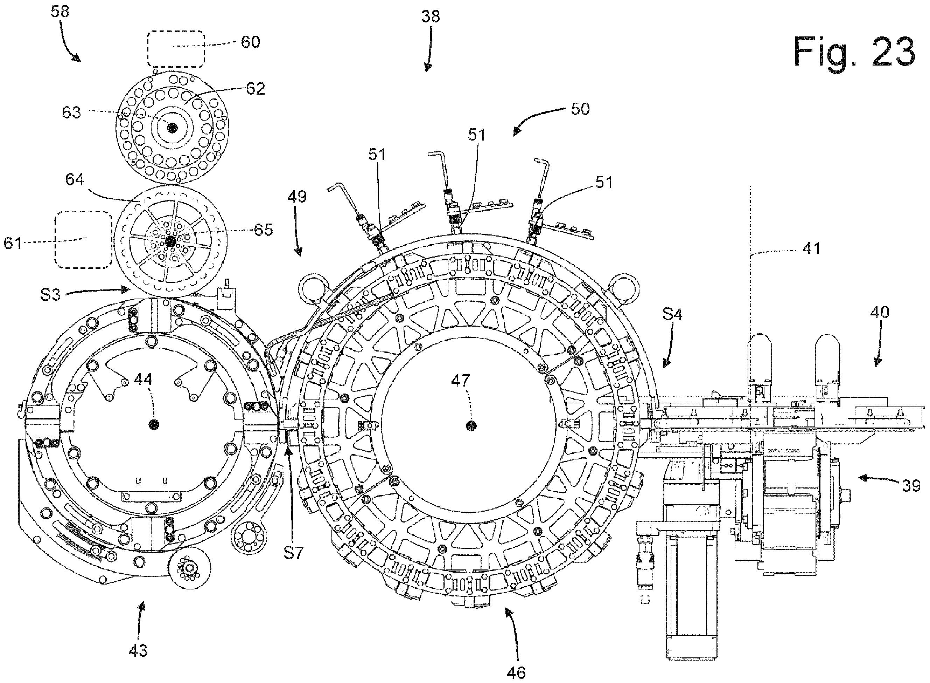

As illustrated in Figure 23, the packing machine 32 comprises a feeding device 58 (only partially illustrated) which cyclically feeds the wrapping sheets 18 into the feeding station S3, namely, it arranges pairs of side-by-side wrapping sheets 18 in the feeding station S3 so that each pair of wrapping sheets 18 is deposited on the periphery of the wrapping wheel 43 in the area of a pair of side-by-side pockets 45. The feeding device 58 comprises an unwinding station wherein a single double-width web 59 of wrapping material (illustrated in Figure 18 ) is unwound from a reel (not illustrated) and is moved (passing alongside the hopper 33) towards a known type of cutting member 60, which is arranged above the feeding station S3 and cyclically performs a transversal cut of the web 59 of wrapping material so as to separate from the web 59 of the wrapping material portions of the web 59 of material which form respective pairs of wrapping sheets 18 placed side by side (and still joined together). Furthermore, the feeding device 58 comprises a cutting member 61 of known type which is arranged above the feeding station S3 downstream of the cutting member 60 and cyclically performs a longitudinal cut of each length of the web 59 of material (which has been separated from the head of the web 59 of wrapping material by the cutting member 60) to divide the portion of the web 59 of material into two sheets 18 of wrapping material placed side by side (and no longer joined together).

The feeding device 58 could also comprise a processing member (for example an embosser) which is arranged between the unwinding station and the cutting member 60 and performs a process (for example an embossment) on the web 59 of wrapping material.

As previously stated, the cutting member 61 is configured to cut the single double-width web 59 of wrapping material in half to obtain, from the single web 59 of wrapping material, a series of pairs of sheets of wrapping material 18 arranged in mutual contact (separated from one another by a longitudinal cutting line but in mutual contact along the longitudinal cutting line, namely, at a distance equal to zero from one another). The wrapping conveyor 38 (formed by the two wrapping wheels 43 and 46) is configured to move each pair of side-by-side groups 14 of cigarettes, in which the two groups 14 of cigarettes are arranged at a mutual distance so that the groups 14 of cigarettes are centred relative the corresponding wrapping sheets 18, which are arranged in mutual contact. Similarly, the wrapping conveyor 39 is also configured to move the groups 14 of cigarettes in which the two groups 14 of cigarettes are arranged at the same mutual distance as the wrapping conveyor 38, namely, arranged at a mutual distance so that the groups 14 of cigarettes are centred relative the corresponding wrapping sheets 18 arranged in mutual contact.

The fact that after the longitudinal cut performed by the cutting member 61 the two wrapping sheets 18 are not spaced (separate) from one another but remain in mutual contact along the longitudinal cutting line (namely, they remain at zero distance from one another) allows to simplify the treatment of the two wrapping sheets 18 and also allows to make the whole wrapping unit B more compact (smaller).

In the embodiment illustrated in Figure 23, the feeding device 58 comprises a suction feeding drum 62 which is mounted in a rotary manner around a horizontal rotation axis 63 (parallel to the rotation axis 44) and cooperates with the cutting member 60 and a subsequent suction feeding drum 64 which is mounted so as to rotate around a horizontal rotation axis 65 (parallel to the rotation axis 44), which is arranged immediately downstream of the feeding drum 62 and cooperates with the cutting member 61. In particular, the feeding drum 64 represents the final component of the feeding device 58 and cyclically deposits a pair of side-by-side wrapping sheets 18 on the periphery of the packing wheel 43 in the area of a pair of pockets 45 located side by side and in the feeding station S3.

As illustrated in Figure 17, the wrapping unit C of the packing machine 33 comprises a wrapping wheel 66 which is arranged downstream of the wrapping conveyor 39, supports a plurality of pockets 67 each designed to contain a pair of sealed wraps 3 arranged side by side (and in mutual contact), and is mounted so as to rotate (with an intermittent, namely, "*in a step-like*" motion) around a horizontal rotation axis 68 perpendicular to the wrapping path P3 in order to move each pocket 67 along a circular wrapping path parallel to the wrapping path P3. Each pocket 67 of the wrapping wheel 66 receives a pair of sealed wraps 3 arranged side by side (and in mutual contact) in a transfer station S8, receives a blank 32 in a feeding station S9 arranged downstream of the transfer station S8 along the wrapping path, and releases together the pair of sealed wraps 3 arranged side by side (and in mutual contact) and the blank 32 in the transfer station S10 arranged downstream of the feeding station S9 along the wrapping path.

In the feeding station S9, each blank 32 is placed resting against the outer surface of the wrapping wheel 66 in the area of a pocket 67 and is held in this position by means of suction; in the transfer station S10, a pair of sealed wraps 3 arranged side by side, by coming out of the corresponding pocket 67, carries therewith the previously fed blank 32.

The packing machine 33 comprises a feeding device 69 which cyclically feeds the blanks 32 into the feeding station S9, namely, arranges each blank 32 in front of a pocket 67.

The packing machine 33 comprises a wrapping wheel 70 which is arranged downstream of the wrapping wheel 66, supports a plurality of pockets 71 each designed to contain a pair of sealed wraps 3 and a blank 32, and is mounted so as to rotate (with an intermittent, namely, "*in a step-like*" motion) around a horizontal rotation axis 72 parallel to the rotation axis 67 in order to move each pocket 71 along a circular wrapping path. Each pocket 71 of the wrapping wheel 72 receives a pair of sealed wraps 3 and a blank 32 in the transfer station S10, folds the blank 32 downstream of the transfer station S10, and releases an almost complete pack 1 of cigarettes (missing only the folding of a pair of flaps which form the outer part of the side walls 9 and 13) in a transfer station S11 arranged downstream of the transfer station S10 along the wrapping path. In the transfer station S11, the folding of each blank 32 is completed (thus completing the formation of the corresponding pack 1 of cigarettes) immediately downstream of the wrapping wheel 70. Once the formation of each pack 1 of cigarettes has been completed, the pack 1 of cigarettes is transferred to a drying conveyor (not illustrated) which moves the packs 1 of cigarettes in succession towards an output of the packing machine 33.

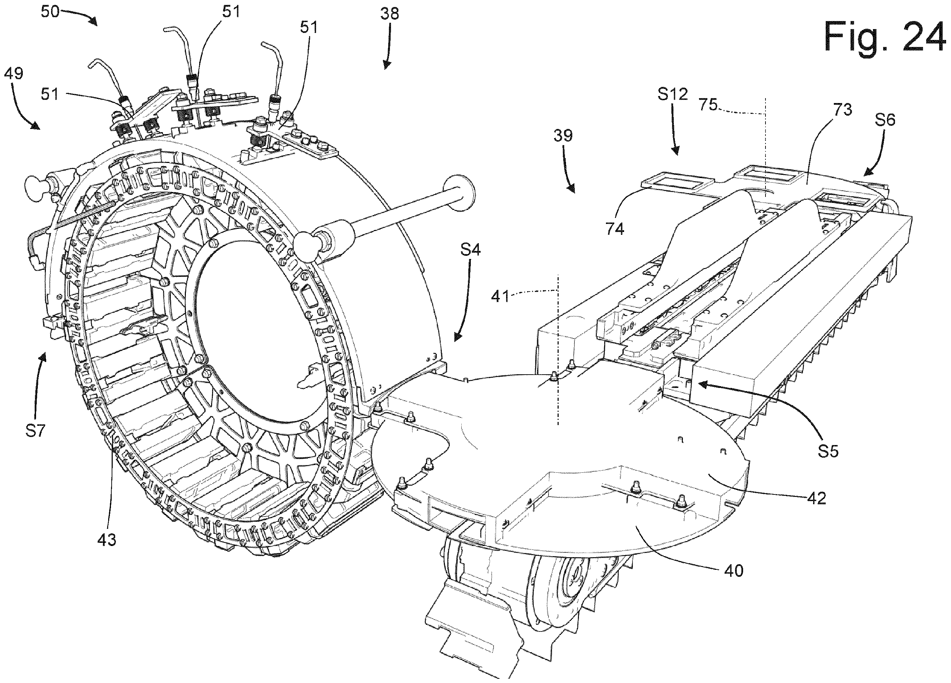

As illustrated in Figure 24, the packing machine 33 comprises a transfer wheel 73 which is interposed between the wrapping conveyor 39 and the wrapping wheel 66, supports a plurality of pockets 74 each designed to contain a pair of side-by-side sealed wraps 3 (and arranged at a given distance from one another), and is mounted so as to rotate (with an intermittent, namely, "*in a step-like*" motion) around a vertical rotation axis 75 (therefore perpendicular to the rotation axis 68 of the wrapping wheel 66 and to the wrapping path P3) in order to move each pocket 74 along a circular transfer path between the transfer station S6, where the pocket 74 receives a pair of side-by-side sealed wraps 3 (and arranged at a given distance from one another) from the wrapping conveyor 39 and a transfer station S12 in which the pocket 74 releases the pair of side-by-side sealed wraps 3. The transfer station S12 is vertically aligned with the transfer station S8 and is arranged below the transfer station S8; a pusher (lifter) is provided which is vertically movable from the bottom upwards and is designed to transfer a pair of side-by-side sealed wraps 3 from the transfer station S12 to the transfer station S8 (namely, from a pocket 74 of the transfer wheel 73 to a pocket 67 of the wrapping wheel 66). In the vertical path from the transfer station S12 to the transfer station S8 the two side-by-side sealed wraps 3 can be pushed towards one another so as to reduce to zero their mutual distance (namely, initially in the transfer station S12 the two side-by-side sealed wraps 3 are at a given distance from one another whereas at the end, in the transfer station S8, the two side by side sealed wraps 3 are in mutual contact).

According to an alternative embodiment not illustrated, the wrapping wheel 66 could also be fed with collars which become part of the packs 1 of cigarettes.

From the foregoing, it is clear that the rotation axes 44 and 47 of the wrapping wheels 43 and 46 are horizontal, are parallel to the wrapping path P3, and are perpendicular to the rotation axes 68 and 72 of the wrapping wheels 66 and 70. Furthermore, from the foregoing, it is evident that the wrapping path P2 of the wrapping conveyor 38 is perpendicular to the forming path P1 of the forming conveyor 37.

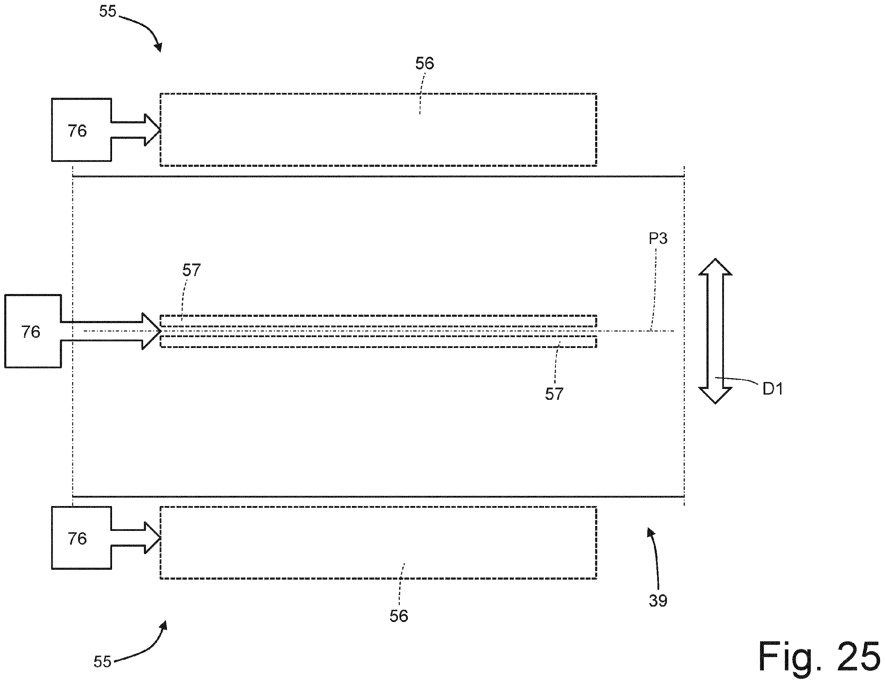

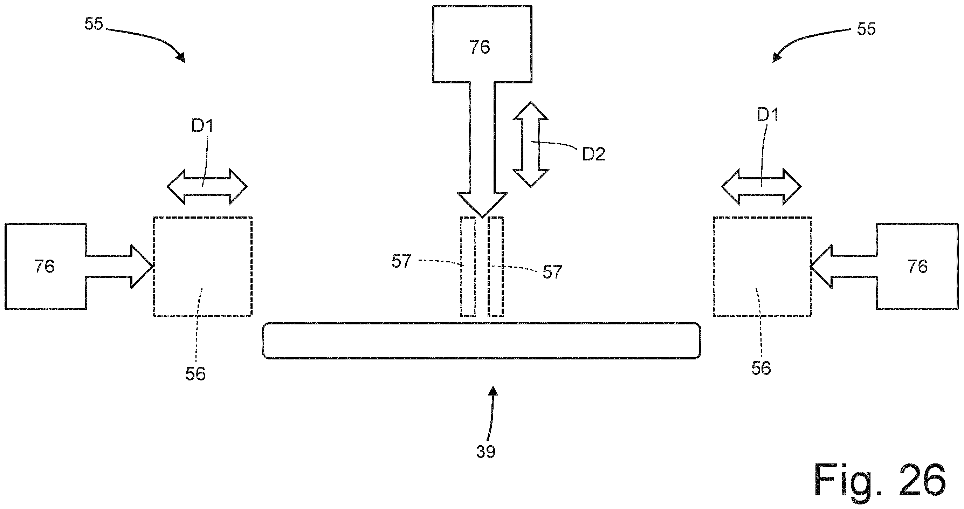

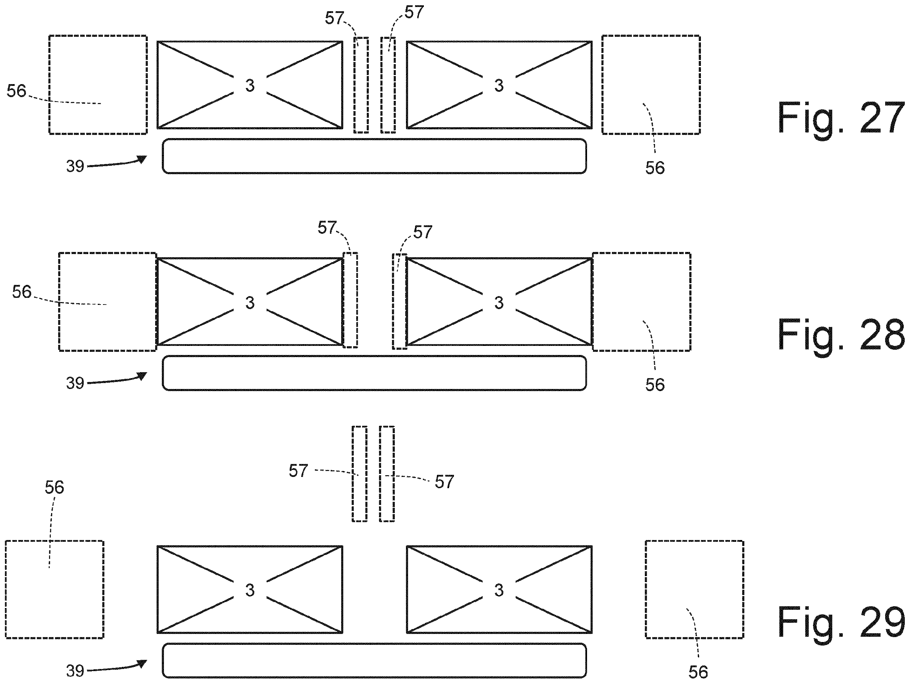

As illustrated in Figures 25 and 26 , each sealing device 55 comprises an actuator 76 configured to move, during the regular operation of the packing machine 33, the sealing heads 56 and 57 between a working position (illustrated in Figure 28) in which the sealing heads 56 and 57 have a first mutual distance which determines a compression of the corresponding sealed wraps 3 (each containing a group 14 of cigarettes wrapped in a wrapping sheet 18) and a moving position (illustrated in Figure 27) in which the sealing heads 56 and 57 have a second mutual distance which is greater than the first mutual distance and allows the corresponding sealed wraps 3 (each containing a group 14 of cigarettes wrapped in a wrapping sheet 18) to move along the wrapping path P3 without touching the sealing heads 56 and 57.

Obviously, the sealing heads 56 and 57 assume the working position (illustrated in Figure 28) when the wrapping conveyor 39 is in a stop step (namely, it is still) and to allow the sealing heads 56 and 57 to carry out the longitudinal heat-sealing of the overlapping ends of the wrapping sheet 18; the compression exerted by the sealing heads 56 and 57 on the sealed wraps 3 (each containing a group 14 of cigarettes wrapped in a wrapping sheet 18) allows to optimally perform the longitudinal heat-sealing of the overlapping ends of the wrapping sheet 18. On the other hand, the sealing heads 56 and 57 assume the movement position (illustrated in Figure 27) when the wrapping conveyor 39 is in a motion step (namely, it is moving) to allow the corresponding sealed wraps 3 (each containing a group 14 of cigarettes wrapped in a wrapping sheet 18) to move along the wrapping path P3 together with the wrapping conveyor 39 without sliding against the sealing heads 56 and 57.

Furthermore, each actuator 76 is configured to move, only when the packing machine 33 is stopped, the sealing heads 56 and 57 to a rest position (illustrated in Figure 29) in which the sealing heads 56 and 57 have a third mutual distance which is (largely) greater than the second mutual distance and allows to prevent the heat emanating from the sealing heads 56 and 57 from overheating the sealed wraps 3 which could remain still along the wrapping path P3 even for several minutes.

In other words, the wrapping conveyor 39 has a step-like motion law which alternates movement steps and stop steps; each actuator 76 is configured to keep the sealing heads 56 and 57 in the movement position during the movement steps of the wrapping conveyor 39 and to move the sealing heads 56 and 57 from the movement position to the working position and vice versa during the stop steps of the wrapping conveyor 39. Furthermore, each actuator 76 is configured to move the sealing heads 56 and 57 to the rest position when the wrapping unit B (namely, the entire packing machine 33) is stopped and thus the wrapping conveyor 39 is stopped.

By way of example, the stroke performed by the sealing heads 56 and 57 to move between the movement position and the working position is approximately 1-2 mm, whereas the stroke performed by the sealing heads 56 and 57 to move to the rest position is about 5-10 mm.

According to the embodiment illustrated in the attached figures, each actuator 76 is configured to move the sealing heads 56 and 57 between the working position and the movement position along a horizontal direction D1 and perpendicular to the wrapping path P3 and is configured to move only the inner sealing heads 57 to and from the rest position along a vertical direction D2 and perpendicular to the direction D1 and to the wrapping path P3. Namely, according to the embodiment illustrated in the accompanying figures, each actuator 76 is configured to move only the inner sealing heads 57 from and towards the rest position along the direction D2 and is configured to move the outer sealing heads 56 from and towards the rest position along the direction D1. According to a different embodiment not illustrated, each actuator 76 is configured to move all the sealing heads 56 and 57 from and towards the rest position along the direction D2.

According to a possible embodiment, each actuator 76 comprises a single motor which performs both the movement along the direction D1 and the movement along the direction D2; alternatively, each actuator 76 comprises a first motor which carries out the movement along the direction D1 and a second motor separate and independent from the first motor which carries out the movement along the direction D2.

As illustrated in Figure 21, in the transfer station S2 a pusher 77 and a follower 78 are arranged, which carry out the transfer of two side-by-side groups 14 of cigarettes from a pair of side-by-side pockets 36 of the forming conveyor 37 to a pair of side-by-side pockets 45 of the wrapping wheel 43. The pusher 77 and the follower 78 always remain in the transfer station S2 while the forming conveyor 37 and the wrapping wheel 43 move along the corresponding paths P1 and P2 so as to cyclically vary the corresponding pockets 36 and 45 which are standing still in transfer station S2. The pusher 77 and the follower 78 move in a mutually synchronized manner to "*pinch*" the two side-by-side groups 14 of cigarettes to be transferred and thus allowing to maintain complete control over the position and stability of the two groups 14 of cigarettes.

As illustrated in Figure 21, in the transfer station S7 a pusher 79 and a follower 80 are arranged, which carry out the transfer of two groups 14 of cigarettes placed side by side and coupled to two wrapping sheets 18 from a pair of side-by-side pockets 45 of the wrapping wheel 43 to a pair of side-by-side pockets 48 of the wrapping wheel 46. The pusher 79 and the follower 80 always remain in the transfer station S7 while the wrapping wheels 43 and 46 move along the corresponding wrapping paths P2 so as to cyclically vary the corresponding pockets 45 and 48 which are standing still in the S7 transfer station. The pusher 79 and the follower 80 move in a mutually synchronized manner to "*pinch*" the two side-by-side groups 14 of cigarettes to be transferred and thus allowing to maintain complete control over the position and stability of the two groups 14 of cigarettes.

As illustrated in Figure 21, in the transfer station S4 a pusher 81 and a follower 82 are arranged, which carry out the transfer of two groups 14 of cigarettes placed side by side and coupled to two wrapping sheets 18 folded into a tube from a pair of side-by-side pockets 48 of the wrapping wheel 46 to a pair of side-by-side pockets 42 of the wrapping wheel 40. The pusher 81 and the follower 82 always remain in the transfer station S4 while the wrapping wheels 46 and 40 move along the corresponding wrapping paths P2 and P4 so as to cyclically vary the corresponding pockets 48 and 42, which are standing still at transfer station S4. The pusher 81 and the follower 82 move in a mutually synchronized manner to "*pinch*" the two side-by-side groups 14 of cigarettes to be transferred and thus allowing to maintain complete control over the position and stability of the two groups 14 of cigarettes.

As illustrated in Figure 22, in the transfer station S5 a pusher 83 is arranged, which carries out the transfer of two groups 14 of cigarettes placed side by side and coupled to two wrapping sheets 18 folded into a tube from a pair of side-by-side pockets 48 of the wrapping wheel 46 to a pair of side-by-side pockets 84 (schematically illustrated in Figure 20) of the wrapping conveyor 39. The pusher 83 always remains in the transfer station S5 while the wrapping wheel 40 and the wrapping conveyor 39 move along the corresponding wrapping paths P4 and P3 so as to cyclically vary the corresponding pockets 42 and 84, which are standing still in the transfer station S5. In the transfer station S5, the tube-like folding of the wrapping sheets 18 has already been completed and stabilized, therefore the pusher 83 does not necessarily require the presence of a corresponding counter-pusher since the tube-like folding of the wrapping sheets 18 contributes in maintaining stable the groups 14 of cigarettes (in fact, also the follower 82 of the transfer station S4 could be omitted).

According to a preferred embodiment, the wrapping conveyor 39 comprises an annular conveyor belt, which is wound around two end pulleys (one of which is motorized), supports the pockets 84 and moves in a step-like manner to cyclically move the pockets 84 along the wrapping path P3.

In the input station S1 the cigarette filters 15 are arranged at the back (namely, the groups 14 of cigarettes are pushed onto the filters 15 to be extracted from the output mouths 35 of the hopper 34). In the transfer station S2 the cigarette filters 15 are arranged at the back (namely, the pusher 77 pushes onto the filters 15). In the transfer station S7 the cigarette filters 15 are arranged in front (namely, the pusher 79 pushes onto the opposite tips of the filters 15). In the transfer station S4 the cigarette filters 15 are arranged at the rear (namely, the pusher 81 pushes onto the filters 15). In the transfer station S5 the cigarette filters 15 are arranged in front (namely, the pusher 83 pushes onto the opposite tips of the filters 15).

As previously stated, the transfer station S7 comprises the pusher 79, which is radially movable relative the rotation axis 47 of the wrapping wheel 46, is arranged outside of the wrapping wheel 46, and is configured to push two side-by-side groups 14 of cigarettes in two corresponding side-by-side pockets 48; moreover, the transfer station S7 comprises the follower 80 which is radially movable relative the rotation axis 47 of the wrapping wheel 46, is arranged inside the wrapping wheel 46, and is configured to accompany, from the opposite side relative the pusher 79, the two side-by-side groups 14 of cigarettes entering into two corresponding side-by-side pockets 48.

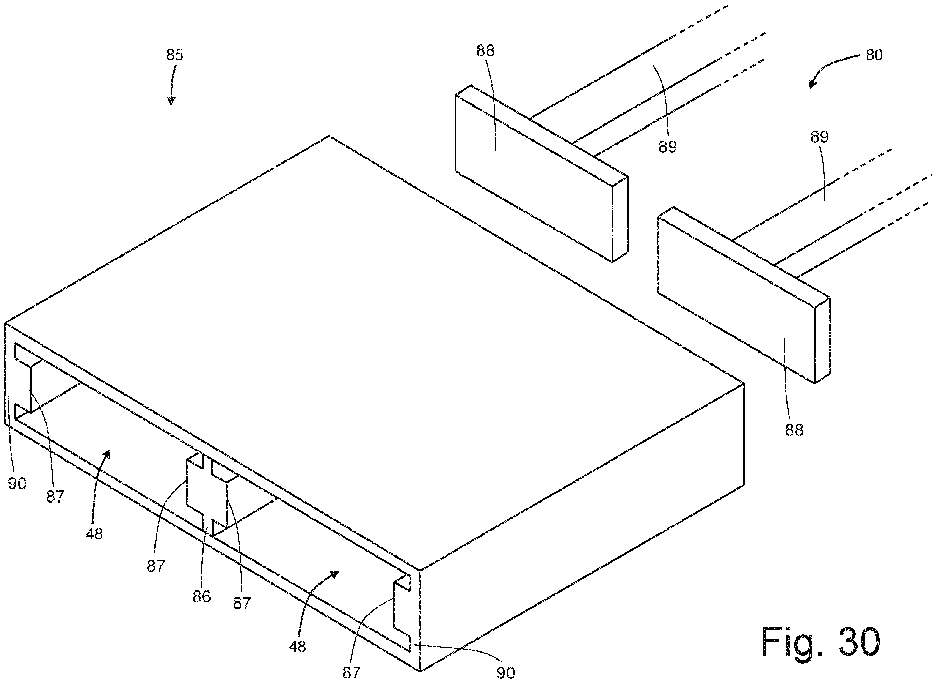

As illustrated in Figure 30, each pair of side-by-side pockets 48 of the wrapping wheel 46 is formed inside a drawer 85 (having a parallelepiped shape), which has a partition wall 86 in the middle that is radially oriented and separates the two pockets 48 relative one another; each partition wall 86 has two folding profiles 87 which are arranged on opposite sides of the partition wall 86 and extend along the entire length of the drawer 85. The follower 80 comprises two plates 88 which are configured to enter the pockets 48 and abut against a pair of corresponding groups 14 of cigarettes with the interposition of two corresponding wrapping sheets 18 and are mounted on respective rods 89, which are mutually connected (namely, mounted on the same support) in order to move together.

Each folding profile 87 is shaped to fold by 90° a smaller flap 28 (illustrated in Figures 4 and 16) of each wrapping sheet 18 against the corresponding group 14 of cigarettes while the group 14 of cigarettes enters a respective pocket 48 formed in the drawer 85. Each drawer 85 comprises, furthermore, for each pocket 48, an outer wall 90 which delimits the pocket 48 on the opposite side of the partition wall 86 (namely, the outer wall 90 is parallel and opposite to the partition wall 86) and has its own folding profile 87 shaped to fold by 90° a smaller flap 28 (illustrated in Figures 4 and 16) of each wrapping sheet 18 against the corresponding group 14 of cigarettes while the group 14 of cigarettes enters a respective pocket 48 formed in the drawer 85. In other words, when a group 14 of cigarettes enters a respective pocket 48 obtained in the drawer 85, the two smaller flaps 28 (illustrated in Figures 4 and 16) of the wrapping sheet 18 fold by 90° against the group 14 of cigarettes due to the effect of the two folding profiles 87 which extend from the partition wall 86 and from the outer wall 90.

According to a preferred embodiment, each pocket 41 of the wrapping wheel 40 has two corresponding inner folding profiles for folding the smaller flaps 29 (illustrated in Figures 4 and 16) of each wrapping sheet 18 by 90° against the corresponding group 14 of cigarettes.

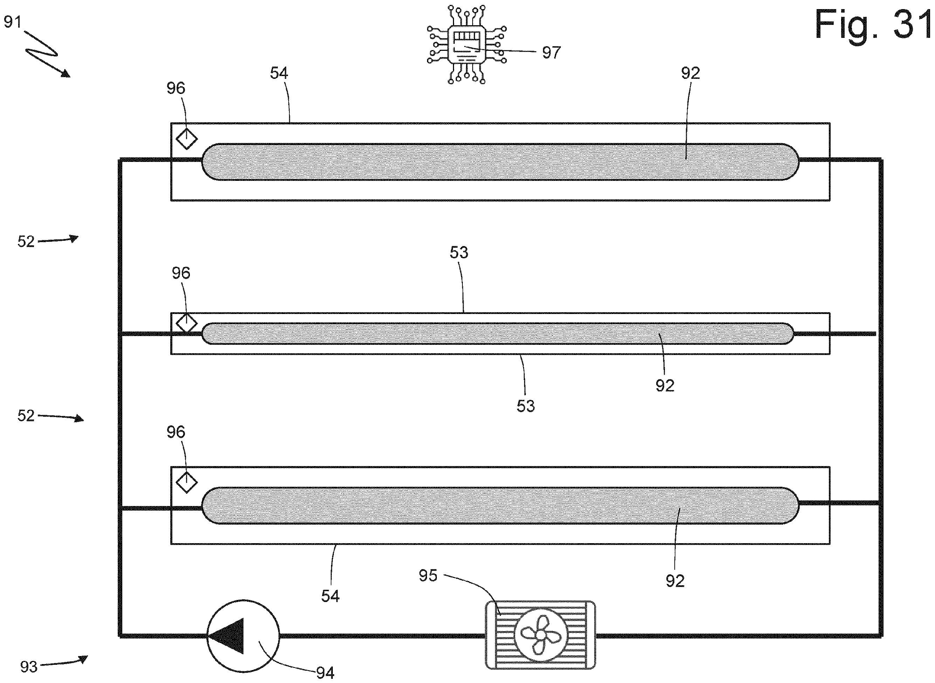

As illustrated in Figure 31, the packing machine 33 comprises a cooling system 91 which is coupled to the two folding devices 52 and is configured to cool the fixed folding blades 53 and 54 of each folding device 52.

The cooling system 91 comprises, for each folding blade 53 or 54, a heat exchanger 92 which is in contact with a surface of the folding blade 53 or 54 (at the centre the same heat exchanger 92 can be shared by both blades 53 of the two side-by-side folding devices 52). Obviously, each heat exchanger 92 is not in direct contact with an operating surface (namely, which performs the folds directly) of a corresponding folding blade 53 or 54, but is in contact with another surface of a corresponding folding blade 53 or 54 other than the operating surface (namely, which performs the folds directly).

Alternatively, each heat exchanger 92 could not rest on a surface of a corresponding folding blade 53 or 54 but could be integrated with the corresponding folding blade 53 or 54 (or could form a single body with the corresponding folding blade 53 or 54).

Each heat exchanger 92 is crossed, in use, by a cooling fluid (typically water) and is therefore connected to a hydraulic circuit 93 provided with a circulation pump 94 and a radiator 95 (to transfer to the outer environment part of the heat from the cooling fluid). Generally, a (significant) portion of the hydraulic circuit 93 (in particular the portion of the hydraulic circuit 93 comprising the circulation pump 94 and the radiator 95) is arranged outside the packing machine 33 and is part of the services of the production plant in which the packing machine 33 is installed. It is important to note that the hydraulic circuit 93 is normally connected to the packing machine 33 independently of the cooling system 91 of the folding devices 52, since the cooling fluid of the hydraulic circuit 93 is used for cooling the electric motors that move the various moving components of the packing machine 33.

According to a possible embodiment, each heat exchanger 92 has the shape of a parallelepiped plate.

According to a possible embodiment, the cooling system 91 comprises (at least) a temperature sensor 96, which measures a temperature of the fixed folding blades 53 and 54 and a control unit 97 configured to adjust the cooling power according to the temperature measured by the temperature sensor 96.

As illustrated in Figure 18, the packing machine 33 comprises a feeding device which, in a feeding station S13 (arranged between the input station S1 and the transfer station S2 relative the moving direction of the forming conveyor 37), cyclically couples, to the pockets 36 of the forming conveyor 37 (already containing the corresponding groups 14 of cigarettes) the reinforcing elements 19 (which are arranged around the groups 14 of cigarettes contained in the pockets 36). In the transfer station S2, when two side-by-side groups 14 of cigarettes are extracted from a pair of side-by-side pockets 36, the two corresponding reinforcing elements 19 are dragged along with the two groups 14 of cigarettes, thus being arranged around the two groups 14 of cigarettes.

In the embodiment illustrated in the accompanying figures, the forming unit A and the wrapping unit B operate on a double line, namely, they process two groups 14 of cigarettes at a time; in other words, the forming conveyor 37, the wrapping conveyor 38, the wrapping conveyor 39, and the wrapping wheel 40 operate on a double line, namely, they process two groups 14 of cigarettes at a time. Whereas, the wrapping unit C operates on a single line, namely, it treats a single blank 32 at a time to form a pack 1 of cigarettes (containing two side-by-side sealed wraps 3) at a time. According to an alternative embodiment, at least part of the forming unit A and/or at least part of the wrapping unit B could operate on a single line, namely, they could process a single group 14 of cigarettes at a time (particularly when pack 1 of cigarettes formed by the packing machine 1 is not of the "*train*" type and therefore houses a single sealed wrap 3). In other words, at least one portion of the forming conveyor 37, of the wrapping conveyor 38, of the wrapping conveyor 39, and of the wrapping wheel 40 could operate on a single line, namely, they could process a single group 14 of cigarettes at a time.

According to a preferred, but not binding, embodiment, the movement of the various components (wrapping wheels, feeding conveyors, pushers, movable folders...) of the packing machine 32 is achieved by means of respective electric motors which are mechanically independent from one another and are virtually synchronized (namely, moved in a step-like manner) (namely, not by means of a physical constraint, but by means of a control constraint). Normally an electric motor is considered as reference ("master") and all the other electric motors ("slaves") follow the position of the reference electric motor ("master").

The packing machine 33 could be modified (in a very simple way) to produce standard wraps 3 (namely, unsealed and therefore devoid of heat-sealing) instead of sealed wraps 3.

The packing machine 33 could be modified (in a very simple way) to form packs 1 of cigarettes each containing a single sealed (or even unsealed) wrap 3, or packs 1 of cigarettes not of the "*twin*" type.

The embodiments described herein can be combined with one another without departing from the scope of the present invention expressed in the claims.

The packing machine 33 described above has numerous advantages.

In the first place, the packing machine 33 described above allows to produce the packs 1 of cigarettes with a high production quality (namely, having extremely precise and squared folds of the wrapping sheet 18) even when operating at a high production speed (namely, with a high number of packs 1 of cigarettes produced per unit of time). Furthermore, the packing machine 33 described above has high accessibility to all its components and thanks to this characteristic it is possible to quickly carry out the format change operations (namely, the adaptation operations to modify the characteristics of the pack 1 of cigarettes to be produced). In fact, an operator who is in front of the packing machine 33 is able to reach by hand all the active parts of the packing machine 29 in a simple, fast, and ergonomic way. In particular, an operator who is in front of the packing machine 33 can easily reach by hand the hopper 34, the forming conveyor 37, the wrapping conveyor 38, the wrapping conveyor 39, and the wrapping wheels 40, 66 and 70.

The wrapping unit B described above allows two sealed wraps 3 to be produced together by simultaneously folding two wrapping sheets 18 around two corresponding groups 14 of cigarettes; in this way it is possible to significantly increase the productivity of the packing machine 33 particularly when a "*twin*" pack 1 of cigarettes is produced, which houses two side-by-side sealed packs 3.

The wrapping unit B described above allows high productivity to be maintained in the long run thanks to the fact that the wrapping sheet 18 is folded into a tube around a group 14 of cigarettes while the group 14 of cigarettes is moved by the wrapping wheels 43 and 46; in fact, the wrapping wheels 43 and 46 have a reduced risk of jamming due to a wrapping sheet 18 or a group 14 of cigarettes which, moving in an unwanted way, get stuck in the machinery and therefore the risk of undesired stops of the packing machine 33 due to jamming in the wrapping conveyor 38 is minimized.

The wrapping unit B described above ensures a high production quality by operating at a high production speed thanks to the fact that the wrapping sheet 18 is folded into a tube around a group 14 of cigarettes while the group 14 of cigarettes is moved from the wrapping wheels 43 and 46; in fact, the wrapping wheels 43 and 46 allow both the position of the wrapping sheet 18 and the position of the group 14 of cigarettes to be controlled with high precision.

Furthermore, the wrapping unit B described above allows to guarantee a high production quality by operating at a high production speed also thanks to the fact that in the area of the longitudinal folds the wrapping sheet 18 is always well spread and does not show any type of wrinkles; this result is obtained thanks to the presence of the cooling system 91 which cools the fixed folding blades 53 and 54 of the folding devices 52. In fact, by operating at a high production speed, the temperature of the sealing heads 56 and 57 of the sealing devices 55 is relatively high and in the long run the sealing heads 56 and 57 tend to heat up the fixed folding blades 53 and 54 and when the fixed folding blades 53 and 54 become too hot and tend to generate small unwanted wrinkles or in any case small unwanted deformations (if not real folding waste) on the parts of the wrapping sheet 18 material with which they come into contact.

The embodiment illustrated in the attached figures refers to the manufacture of a pack of cigarettes, but the present invention can also be applied without substantial modifications to the manufacture of any other type of pack of smoking articles (for example a pack of cigars, a pack of electronic cigarettes of the liquid vaporization type, a pack of new generation cigarettes without tobacco combustion...).

### LIST OF REFERENCE NUMBERS OF THE FIGURES

- 1: pack of cigarettes
- 2: outer container
- 3: sealed wrap
- 4: lid
- 5: hinge
- 6: lower wall
- 7: front wall
- 8: rear wall
- 9: side walls
- 10: upper wall
- 11: front wall
- 12: rear wall
- 13: side walls
- 14: group of cigarettes
- 15: filter
- 16: extraction opening
- 17: closing label
- 18: wrapping sheet
- 19: reinforcing element
- 20: front wall
- 21: side walls
- 22: lower wall
- 23: rear wall
- 24: flaring
- 25: ends
- 26: ends
- 27: sealing fin
- 28: smaller flap
- 29: smaller flap
- 30: larger flap
- 31: larger flap
- 32: blank
- 33: packing machine
- 34: hopper
- 35: output mouth
- 36: pockets
- 37: forming conveyor
- 38: wrapping conveyor
- 39: wrapping conveyor
- 40: wrapping wheel
- 41: rotation axis
- 42: pocket
- 43: wrapping wheel
- 44: rotation axis
- 45: pocket
- 46: wrapping wheel
- 47: rotation axis
- 48: pocket
- 49: folding device
- 50: sealing device
- 51: sealing heads
- 52: folding device
- 53: folding blades
- 54: folding blades
- 55: sealing device
- 56: outer sealing head
- 57: inner sealing head
- 58: feeding device
- 59: web of wrapping material
- 60: cutting member
- 61: cutting member
- 62: feeding drum
- 63: rotation axis
- 64: feeding drum
- 65: rotation axis
- 66: wrapping wheel
- 67: pockets
- 68: rotation axis
- 69: feeding device
- 70: wrapping wheel
- 71: pockets
- 72: rotation axis
- 73: transfer wheel
- 74: pockets
- 75: rotation axis
- 76: actuator
- 77: pusher
- 78: follower
- 79: pusher
- 80: follower
- 81: pusher
- 82: follower
- 83: pusher
- 84: pockets
- 85: compartment
- 86: partition wall
- 87: folding profiles
- 88: plates
- 89: rod
- 90: outer wall
- 91: cooling system
- 92: heat exchanger
- 93: hydraulic circuit
- 94: circulation pump
- 95: radiator
- 96: temperature sensor
- 97: control units
- P1: forming path
- P2: wrapping path
- P3: wrapping path
- P4: wrapping path
- S1: input station
- S2: transfer station
- S3: feeding station
- S4: transfer station
- S5: transfer station
- S6: transfer station
- S7: transfer station
- S8: transfer station
- S9: feeding station
- S10: transfer station
- S11: transfer station
- S12: transfer station
- S13: feeding station
- A: forming unit
- B: wrapping unit
- C: wrapping unit
- D1: direction
- D2: direction

## Claims

1. A wrapping unit (B) to produce a sealed wrap (3) by folding a wrapping sheet (18) around a group (14) of smoking articles; the wrapping unit (B) comprises:
a wrapping conveyor (39), which moves the group (14) of smoking articles coupled to the wrapping sheet (18) along a wrapping path (P3);
a folding device (52), which is coupled to the wrapping conveyor (39), is configured to fold the wrapping sheet (18) around the group (14) of articles and comprises fixed folding blades (53, 54), which are arranged along the wrapping conveyor (39); and
a sealing device (55), which is coupled to the wrapping conveyor (39) downstream of the folding device (52) and is configured to form a seal on the wrapping sheet (18) folded around the group (14) of smoking articles;
the wrapping unit (B) is **characterized in that** it comprises a cooling system (91), which is configured to cool the fixed folding blades (53, 54) of the folding device (52).

2. The wrapping unit (B) according to claim 1, wherein the cooling system (91) comprises, for each folding blade (53, 54), a heat exchanger (92), which is in contact with a surface of the folding blade (53, 54).

3. The wrapping unit (B) according to claim 2, wherein the cooling system (91) comprises, for each folding blade (53, 54), a heat exchanger (92), which is integrated with the folding blade (53, 54).

4. The wrapping unit (B) according to claim 1, 2 or 3, wherein the cooling system (91) comprises at least one heat exchanger (92), which, in use, is flown through by a cooling fluid and is arranged in contact with a surface of a folding blade (53, 54) .

5. The wrapping unit (B) according to claim 2, 3 or 4, wherein each heat exchanger (92) has the shape of a parallelepiped plate.

6. The wrapping unit (B) according to one of the claims from 1 to 5, wherein the cooling system (91) comprises:
a temperature sensor (96), which measures a temperature of the fixed folding blades (53, 54); and
a control unit (97) configured to adjust the cooling power depending on the temperature measured by the temperature sensor (96).

7. A wrapping method to produce a sealed wrap (3) by folding a wrapping sheet (18) around a group (14) of smoking articles; the wrapping method comprises the steps of:
moving, by means of a wrapping conveyor (39), the group (14) of smoking articles coupled to the wrapping sheet (18) along a wrapping path (P3);
folding, by means of a folding device (52) coupled to the wrapping conveyor (39), the wrapping sheet (18) around the group (14) of articles; and
forming, by means of a sealing device (55) coupled to the wrapping conveyor (39) downstream of the folding device (52), a seal on the wrapping sheet (18) folded around the group (14) of smoking articles;
wherein the folding device (52) comprises fixed folding blades (53, 54), which are arranged along the wrapping conveyor (39); the wrapping method is **characterized in that** it comprises the further step of cooling, by means of a cooling system (91), the fixed folding blades (53, 54) of the folding device (52).

## Patentansprüche

1. Umwicklungseinheit (B), um eine versiegelte Umwicklung (3) durch Falten eines Umwicklungsbogens (18) um eine Gruppe (14) von Rauchartikeln herzustellen; wobei die Umwicklungseinheit (B) umfasst:
einen Umwicklungsförderer (39), der die Gruppe (14) von Rauchartikeln, die an den Umwicklungsbogen (18) gekoppelt ist, entlang eines Umwicklungspfads (P3) bewegt;
eine Faltvorrichtung (52), die an den Umwicklungsförderer (39) gekoppelt ist, konfiguriert ist, den Umwicklungsbogen (18) um die Gruppe (14) von Artikeln zu falten, und feste Falzklingen (53, 54) umfasst, die entlang des Umwicklungsförderers (39) angeordnet sind; und
eine Versiegelungsvorrichtung (55), die an den Umwicklungsförderer (39) stromabwärts der Faltvorrichtung (52) gekoppelt ist und konfiguriert ist, eine Versiegelung an dem Umwicklungsbogen (18), der um die Gruppe (14) von Rauchartikeln gefaltet ist, zu bilden;
wobei die Umwicklungseinheit (B) **dadurch gekennzeichnet ist, dass** sie ein Kühlsystem (91) umfasst, das konfiguriert ist, die festen Falzklingen (53, 54) der Faltvorrichtung (52) zu kühlen.

2. Umwicklungseinheit (B) nach Anspruch 1, wobei das Kühlsystem (91) für jede Falzklinge (53, 54) einen Wärmetauscher (92) umfasst, der mit einer Oberfläche der Falzklinge (53, 54) in Kontakt ist.

3. Umwicklungseinheit (B) nach Anspruch 2, wobei das Kühlsystem (91) für jede Falzklinge (53, 54) einen Wärmetauscher (92) umfasst, der mit der Falzklinge (53, 54) integriert ist.

4. Umwicklungseinheit (B) nach Anspruch 1, 2 oder 3, wobei das Kühlsystem (91) mindestens einen Wärmetauscher (92) umfasst, der im Betrieb durch ein Kühlfluid durchströmt wird und in Kontakt mit einer Oberfläche einer Falzklinge (53, 54) angeordnet ist.

5. Umwicklungseinheit (B) nach Anspruch 2, 3 oder 4, wobei jeder Wärmetauscher (92) die Form einer Parallelepipedplatte aufweist.

6. Umwicklungseinheit (B) nach einem der Ansprüche 1 bis 5, wobei das Kühlsystem (91) umfasst:
einen Temperatursensor (96), der eine Temperatur der festen Falzklingen (53, 54) misst; und
eine Steuereinheit (97), die konfiguriert ist, die Kühlleistung abhängig von der Temperatur, die durch den Temperatursensor (96) gemessen wird, einzustellen.

7. Umwicklungsverfahren, um eine versiegelte Umwicklung (3) durch Falten eines Umwicklungsbogens (18) um eine Gruppe (14) von Rauchartikeln herzustellen; wobei das Umwicklungsverfahren die Schritte umfasst:
Bewegen, mittels eines Umwicklungsförderers (39), der Gruppe (14) von Rauchartikeln, die an den Umwicklungsbogen (18) gekoppelt ist, entlang eines Umwicklungspfads (P3);
Falten, mittels einer Faltvorrichtung (52), die an den Umwicklungsförderer (39) gekoppelt ist, des Umwicklungsbogens (18) um die Gruppe (14) von Artikeln und
Bilden, mittels einer Versiegelungsvorrichtung (55), die an den Umwicklungsförderer (39) stromabwärts der Faltvorrichtung (52) gekoppelt ist, einer Versiegelung an dem Umwicklungsbogen (18), der um die Gruppe (14) von Rauchartikeln gefaltet ist;
wobei die Faltvorrichtung (52) feste Falzklingen (53, 54) umfasst, die entlang des Umwicklungsförderers (39) angeordnet sind; wobei das Umwicklungsverfahren **dadurch gekennzeichnet ist, dass** es den weiteren Schritt des Kühlens der festen Falzklingen (53, 54) der Faltvorrichtung (52) mittels eines Kühlsystems (91) umfasst.

## Revendications

1. Unité d'emballage (B) pour produire un emballage étanchéifié (3) par pliage d'une feuille d'emballage (18) autour d'un groupe (14) d'articles à fumer ;
l'unité d'emballage (B) comprend :
un convoyeur d'emballage (39), qui déplace le groupe (14) d'articles à fumer accouplé à la feuille d'emballage (18) le long d'un chemin d'emballage (P3) ;
un dispositif de pliage (52), qui est accouplé au convoyeur d'emballage (39), est configuré pour plier la feuille d'emballage (18) autour du groupe (14) d'articles et comprend des lames de pliage (53, 54) fixes, qui sont agencées le long du convoyeur d'emballage (39) ; et
un dispositif d'étanchéité (55), qui est accouplé au convoyeur d'emballage (39) en aval du dispositif de pliage (52) et est configuré pour former un joint d'étanchéité sur la feuille d'emballage (18) pliée autour du groupe (14) d'articles à fumer ;
l'unité d'emballage (B) est **caractérisée en ce qu'**elle comprend un système de refroidissement (91), qui est configuré pour refroidir les lames de pliage (53, 54) fixes du dispositif de pliage (52).

2. Unité d'emballage (B) selon la revendication 1, dans laquelle le système de refroidissement (91) comprend, pour chaque lame de pliage (53, 54), un échangeur de chaleur (92), qui est en contact avec une surface de la lame de pliage (53, 54).

3. Unité d'emballage (B) selon la revendication 2, dans laquelle le système de refroidissement (91) comprend, pour chaque lame de pliage (53, 54), un échangeur de chaleur (92), qui est intégré avec la lame de pliage (53, 54).

4. Unité d'emballage (B) selon la revendication 1, 2 ou 3, dans laquelle le système de refroidissement (91) comprend au moins un échangeur de chaleur (92), qui, lors d'une utilisation, est traversé par l'écoulement d'un fluide de refroidissement et est agencé en contact avec une surface d'une lame de pliage (53, 54).

5. Unité d'emballage (B) selon la revendication 2, 3 ou 4, dans laquelle chaque échangeur de chaleur (92) présente la forme d'une plaque parallélépipédique.

6. Unité d'emballage (B) selon l'une quelconque des revendications 1 à 5, dans laquelle le système de refroidissement (91) comprend :
un capteur de température (96), qui mesure une température des lames de pliage (53, 54) fixes ; et
une unité de commande (97) configurée pour régler la puissance de refroidissement en fonction de la température mesurée par le capteur de température (96).

7. Procédé d'emballage pour produire un emballage étanchéifié (3) par pliage d'une feuille d'emballage (18) autour d'un groupe (14) d'articles à fumer ;
le procédé d'emballage comprend les étapes de :
déplacement, au moyen d'un convoyeur d'emballage (39), du groupe (14) d'articles à fumer accouplés à la feuille d'emballage (18) le long d'un chemin d'emballage (P3) ;
pliage, au moyen d'un dispositif de pliage (52) accouplé au convoyeur d'emballage (39), de la feuille d'emballage (18) autour du groupe (14) d'articles ; et
formation, au moyen d'un dispositif d'étanchéité (55) accouplé au convoyeur d'emballage (39) en aval du dispositif de pliage (52), d'un joint d'étanchéité sur la feuille d'emballage (18) pliée autour du groupe (14) d'articles à fumer ;
dans lequel le dispositif de pliage (52) comprend des lames de pliage (53, 54) fixes, qui sont agencées le long du convoyeur d'emballage (39) ; le procédé d'emballage est **caractérisé en ce qu'**il comprend l'étape supplémentaire de refroidissement, au moyen d'un système de refroidissement (91), des lames de pliage (53, 54) fixes du dispositif de pliage (52).
